(19) Europäisches Patentamt
European Patent Office
Office européen des brevets

(11) EP 0 792 323 B1

(12) FASCICULE DE BREVET EUROPEEN

(45) Date de publication et mention de la délivrance du brevet: **16.06.1999 Bulletin 1999/24**

(21) Numéro de dépôt: **95940318.9**

(22) Date de dépôt: **15.11.1995**

(51) Int Cl.$^6$: **C08L 83/06**, C08L 83/08, C09D 183/06, C09D 183/08

(86) Numéro de dépôt international: **PCT/FR95/01505**

(87) Numéro de publication internationale: **WO 96/16126 (30.05.1996 Gazette 1996/25)**

# (54) POLYORGANOSILOXANES FONCTIONNALISES ET L'UN DE LEURS PROCEDES DE PREPARATION

MODIFIZIERTE POLYORGANOSILOXANE UND EIN VERFAHREN ZUR IHRER HERSTELLUNG

FUNCTIONALISED POLYORGANOSILOXANES AND ONE METHOD FOR PREPARING SAME

(84) Etats contractants désignés: **AT BE CH DE DK ES FR GB GR IE IT LI LU NL PT SE**

(30) Priorité: **18.11.1994 FR 9414057**

(43) Date de publication de la demande: **03.09.1997 Bulletin 1997/36**

(73) Titulaire: **RHODIA CHIMIE**
**92408 Courbevoie Cédex (FR)**

(72) Inventeurs:
- **JOST, Philippe**
  **F-69440 Taluyers (FR)**
- **PEIGNIER, Michel**
  **F-69210 Lentilly (FR)**
- **PRIOU, Christian**
  **F-69100 Villeurbanne (FR)**

(74) Mandataire: **Trolliet, Maurice et al**
**RHODIA SERVICES**
**Direction de la Propriété Industrielle**
**25, quai Paul Doumer**
**92408 Courbevoie Cédex (FR)**

(56) Documents cités:
**EP-A- 0 403 400**
**EP-A- 0 565 327**
**EP-A- 0 590 954**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 792 323 B1

## Description

Le domaine de la présente invention est celui des polyorganosiloxanes comportant une ou plusieurs fonctionnalités apportées par des substituants du silicium et conférant aux polymères des propriétés spécifiques, par exemple, d'anti-adhérence, de lubrification ou de compatibilisation... recherchées dans les applications des silicones.

Plus précisément, la présente invention concerne un polyorganosiloxane multifonctionnalisé, dont les fonctionnalités sont portées chacune par des motifs siloxyles différents, par l'intermédiaire de liaison SiC ou SiOC.

La présente invention concerne également un procédé de fonctionnalisation de polyorganosiloxanes permettant, notamment, de conduire aux polyorganosiloxanes multi-fonctionnalisés visés ci-dessus.

Classiquement, la fonctionnalisation des polyorganosiloxanes peut être realisée par substitution des hydrogènes portés par les atomes de silicium de la chaine.

Selon une première voie, cette substitution peut consister en une réaction d'hydrosilylation entre un polyorganohydrogénosiloxane et un réactif oléfinique, porteur d'au moins une double liaison $\pi$ apte à réagir avec l'hydrogène selon un mécanisme d'addition. L'hydrosilylation est une réaction parfaitement connue dans le domaine technique considéré. Usuellement, cette réaction est catalysée au platine. Elle est largement décrite dans la littérature. A cet égard on peut se référer, par exemple, à l'article de V.M KOPILOV et Coll., Z. Obsh. Khim., vol. 57 (5), (1987) p. 1117-1127. Dans cette première voie, tous les atomes de silicium à hydrogène disponible sont substitués par des motifs organiques via des liaisons SiC, lesdits motifs organiques étant apportés par le ou les réactifs oléfiniques. Une illustration, parmi d'autres, de l'hydrosilylation est donnée par la demande de brevet européen N° 504 800, qui décrit l'addition d'un polyoxyalkylène substitué par un groupement oléfinique (vinylique) sur un polydiméthylhydrogénosiloxane de formule :

$$Me_3SiO—(Me_2SiO)_{157}—(MeHSiO)_{21}—SiMe_3\ (Me = CH_3),$$

en présence d'un ester monocarboxylique d'un solvant du type alcanediol. Dans ce cas, il apparaît clairement qu'un seul type de fonctionnalisation est envisageable et seuls les groupements susceptibles d'être substitués par des restes oléfiniques peuvent être greffés sur le polyorganosiloxane.

Une deuxième voie de fonctionnalisation est celle selon laquelle on substitue les siliciums du polyorganosiloxane concemé, par des restes fonctionnels liés à ce dernier grâce à des ponts SiOC. Les réactions envisageables pour ce faire sont, par exemple, celles faisant intervenir des $\alpha,\omega$-chlorosiloxanes et des alcools ou bien encore des polyorganohydrogénosiloxanes et des alcools selon un mécanisme de déshydrogénocondensation.

Ces réactions de déshydrogénocondensation, qualifiées également d'alcoolyses d'organohydrogénopolysiloxanes, sont décrites notamment dans S.KOAMA et Y HUMEKI. Journal of Applied Polymere Science Vol.21 (277), pages 863-867.

Cet article fait référence à des polyméthylhydrogénosiloxanes mis en présence d'alcool du type méthanol ou éthanol et d'un catalyseur choisi parmi les bases et certains chlorures métalliques (acides de Lewis). Le solvant mis en oeuvre est le benzène. Les auteurs obtiennent ainsi un polyalcoxyméthylsiloxane doué lui aussi d'une seule fonctionnalité.

On a également recours à la déshydrogénocondensation dans l'invention décrite par le brevet US N° 5 310 842 relatif à des polyorganosiloxanes alcoxysubstitués. Ces produits comprennent des motifs diméthylsiloxyles et méthylalcoxysiloxyles et comportent de 4 à 30 atomes de carbone. Le catalyseur mis en oeuvre dans cette déshydrogénocondensation est de nature platinique (acide chloroplatinique). Toutes les fonctions méthylhydrogénosiloxyles de départ sont transformées (taux de conversion supérieur à 99 %) en motifs alcoxysubstitués. Les chaînes alcoxylées latérales interviennent dans la compatibilisation des polyorganosiloxanes avec d'autres produits comme, par exemple des polymères organiques, avec lesquels ils sont mis en oeuvre dans les applications finales. Bien que les auteurs prétendent que ces polyorganosiloxanes alcoxylés présentent une bonne résistance à l'hydrolyse, il peut être permis d'en douter, compte tenu de la sensibilité non négligeable du pont oxygène à cet égard. En outre, on retrouve dans cette invention antérieure l'inconvénient de la monofonctionnalisation du polyorganosiloxane.

Cette revue de l'art antérieur fait apparaître que des polyorganosiloxanes multifonctionnalisés font défaut. De tels produits seraient pourtant fort appréciables dans certaines des utilisations des silicones, car il est évident que la multifonctionnalisation ne fait qu'accroître les potentialités de ces produits, déja très performants. L'apport de fonctionnalités multiples par greffage procurerait également l'avantage indéniable, de pouvoir construire des silicones sur mesure, spécifiquement adaptés aux applications visées.

Dans cet état de fait, l'un des objectifs essentiel de la présente invention est de fournir un polyorganosiloxane fonctionnalisé, en particulier multifonctionnalisé et plus particulièrement encore comprenant au moins deux sites (ou motifs) siloxyles de fonctionnalisation différents, porteur chacun d'un type de fonctionnalité, correspondant à une pluralité d'espèces fonctionnelles.

Un autre objectif essentiel de l'invention est de fournir un polyorganosiloxane obtenable de manière simple et économique.

Un autre objectif de la présente invention est de fournir un précurseur monofonctionnalisé permettant d'accéder à des polyorganosiloxanes multi et en particulier bifonctionnalisés.

Un autre objectif essentiel de l'invention est de fournir un procédé de préparation de polyorganosiloxanes présentant simultanément plusieurs types de fonctions apportées par greffage, en particulier deux types de fonctions, ledit procédé se devant d'être aisé à mettre en oeuvre et d'un coût de revient faible, tant sur le plan des matières premières employées que sur le plan des moyens matériels, de l'énergie et du temps nécessaires.

Un autre objectif essentiel de l'invention est de fournir un procédé de synthèse d'un précurseur ou d'un produit intermédiaire, permettant de conduire aux polyorganosiloxanes multifonctionnels, en particulier bifonctionnel susvisés.

C'est en cherchant à satisfaire ces objectifs, que la Demanderesse a découvert de manière tout à fait surprenante et inattendue, après de nombreuses études et expérimentations, que contrairement à ce qu'enseignent KOAMA et HUMEKI, l'alcoolyse de polyméthylhydrogénosiloxanes, conduit dans certaines conditions, à des motifs siloxyles alcoxysubstitués et à des motifs hydrogénosiloxyles dont l'hydrogène n'a pas réagi, selon une stoechiométrie particulière.

Il s'ensuit que la présente invention, qui permet d'atteindre les susdits objectifs parmi d'autres, concerne, à titre de produit nouveau *per se,* un polyorganosiloxane fonctionnalisé, et plus particulièrement multifonctionnalisé, comprenant, par molécule,

- $\alpha$ - d'une part, au moins un motif siloxyle fonctionnel de formule :

$$\text{(I)} \qquad (R)_a\ Y\ Si(O)_{\frac{3-a}{2}}$$

dans laquelle

* a = 0, 1 ou 2
* R est un radical hydrocarboné monovalent choisi parmi les alkyles linéaires ou ramifiés, ayant de 1 à 6 atomes en particulier le méthyle, l'éthyle, le propyle le butyle et/ou parmi les aryles et en particulier le phényle, le méthyle étant plus particulièrement préféré, les radicaux R étant identiques ou différents quand a = 2,
* Y est un radical alcoxyle linéaire ou ramifié choisi, de préférence, parmi les alcoxyles en $C_1$-$C_{15}$, en particulier $C_1$-$C_6$ le méthoxyle, l'éthoxyle et le(iso)propoxyle étant plus particulièrement retenus,

- $\beta$ - et d'autre part, au moins un motif siloxyle fonctionnel de formule :

$$\text{(II)} \qquad (R)_b\ W\ Si(O)_{\frac{3-b}{2}}$$

dans laquelle

* b = 0, 1 ou 2,
* R répond à la même définition que celle donnée supra pour le substituant R du motif (I) et peut être identique ou différent de ce dernier,
* W est l'hydrogène ou un radical hydrocarboné monovalent ayant de 2 à 30 atomes de carbone et éventuellement des atomes de S et/ou O et/ou des halogènes et constituant un reste fonctionnel, relié au silicium par une liaison Si-C,

ce reste étant de préférence choisi parmi les groupes suivants:

(i) un groupe alkyle, aralkyle ou aryle substitué par un ou plusieurs atomes d'halogène(s) et/ou par un radical mono ou polyhalogénoalkyle,

(2i) un groupe polyéther-oxyde de formule $—(R^1—O—)_e—R^2$ avec

$R^1$ représentant un groupe alkylène et,
$R^2$ représentant un atome d'hydrogène ou un groupe alkyle et e = 1 à 5,

(3i) un groupe époxy résultant de l'union d'un atome d'oxygène avec deux atomes de carbone appartenant à un groupe alkyle cycloalkyle ou alcényle,

(4i) un groupe alcoxyalkyle ou aryloxyalkyle (5i) un groupe alkyle mono ou polyhydroxylé et/ou mono ou polycarbonylé et/ou mono ou polyesterifié,
(6i) un groupe phénolique stériquement encombré ou un groupe dérivant d'une benzophénone mono ou dihydroxylée,
(7i) un groupe alcoxysilyle, de préférence trialcoxysilyle,

- γ - et éventuellement au moins un motif siloxyle (**III**) de formule suivante :

$$(R)_c\,(H)_d\,Si(O)_{\frac{4-(c+d)}{2}} \qquad (III)$$

dans laquelle

* $c = 0, 1, 2$ ou 3, $d = 0$ ou 1 et $c + d \leq 3$
* les substituants R étant tels que définis ci-dessus dans les motifs (**I**) et (**II**).
A la connaissance de la Demanderesse, aucun document de l'art antérieur ne décrit des polyorganosiloxanes présentant, à la fois des motifs fonctionnalisés par un reste fonctionnel relié au silicium par une liaison SiOC et des motifs siloxyles fonctionnalisés par un reste fonctionnel relié au silicium par une liaison SiC.

Dans ce polyorganosiloxane selon l'invention, la première fonctionnalité Y alcoxyle est portée par les motifs de formule (**I**) tandis que la deuxième fonctionnalité W hydrocarbonée apparaît dans les motifs de formule (**II**) définis ci-dessus.

Concernant W, le cas particulier où ce radical correspond à l'hydrogène, est celui illustrant le polyorganosiloxane qui est précurseur du polyorganosiloxane multifonctionnel et qui constitue un autre objet de l'invention.

Selon une terminologie usuelle dans les silicones, ces motifs (**I**) et (**II**) peuvent être des motifs M,D mais également T. La présence de motifs T correspond à une variante dans laquelle les polyorganosiloxanes se présentent sous forme de chaînes linéaires réticulées entre elles.

Les fonctions Y sont caractérisées en ce qu'elles sont hydrolysables et qu'elles peuvent donc permettre le greffage sur différents supports, ce qui peut être particulièrement intéressant dans certaines applications, e.g. : ... anti-adhérence, lubrification, .....

W peut être constitué par une fonction hydrocarbonée, plus difficilement hydrolysable et susceptible d'exprimer diverses propriétés en fonction de sa nature chimique. Cela peut être la compatibilisation avec des polymères organiques, ou bien encore l'apport d'une fonction de réticulation au polyorganosiloxane.

Conformément à une modalité avantageuse de l'invention, ce substituant fonctionnel W est choisi parmi les radicaux suivants :

- un radical a alkyle linéaire ayant de 8 à 12 atomes de carbone en particulier des radicaux avec des restes fonctionnels haloaéné (type (i) et, de formule :

$$-(CH_2)_3-C_6F_5$$

(1)

ou

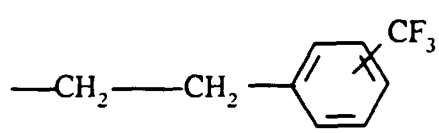

(2)

- un radical avec un reste fonctionnel halogéné (type (i)) et éthérifié (type (2i)) et de formule :

$$-CH_2-CH_2-CH_2-O-CH_2-CF_3$$

(3)

- un radical (poly)éthérifié de type (2i) et de formule :

$$-CH_2-CH_2-CH_2-O-\left[(CH_2)_2-O\right]_5-\left[CH_2-CH(CH_3)\right]_5-O-H\ (ou\ CH_3)$$

(4)

ou

$$-CH_2-CH_2-CH_2-O-CH_3$$

(5)

- un radical de type (3i), et de formule :

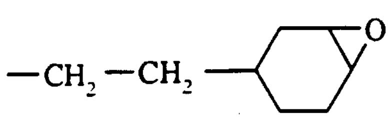 ; 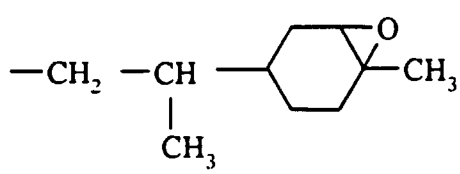 ;

(6) (7)

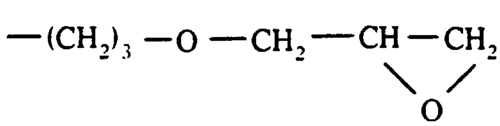 ou 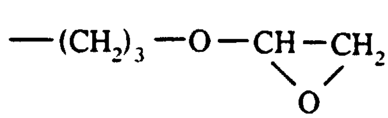

(8) (9)

- un radical aryloxyalkyle de type (4i) et de formule :

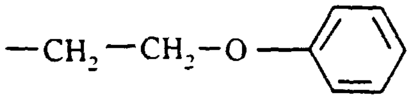 ; 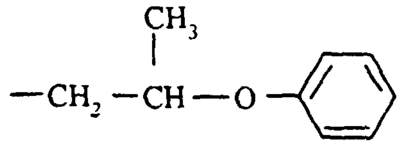 ;

(10) (11)

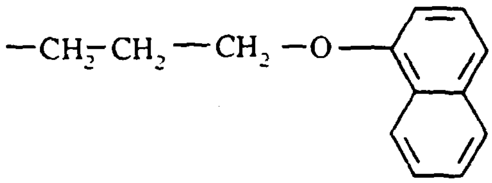 ;

(12)

- un radical alkyle estérifié de type (5i) et de formule :

$-(CH_2)_3-OH$ ; $-CH_2-CH_2-CH_2-O-CO-CH_3$ ;

(13) (14)

$-CH_2-CH_2-CH_2-O-CO-C_2H_5$ ou $-(CH_2)_{10}-CO-O-CH_3$

(15) (16)

- un radical de type (6i) et de formule :

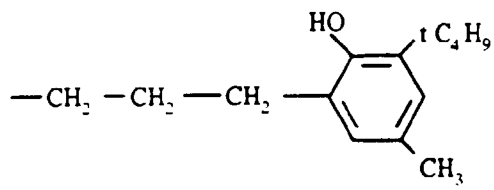

(17)

ou

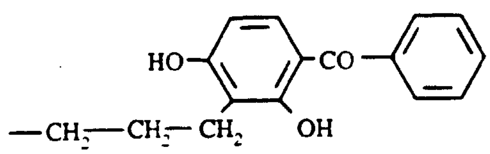

(18)

- un radical de type (7i) et de formule :

$$-CH_2-Si(OCH_3)_3 \quad \text{ou} \quad -CH_2-CH_2-Si(OC_2H_5)_3$$

(19) (20)

Comme indiqué ci-avant, l'invention n'est pas limitée au cas où le polyorganosiloxane comporte seulement deux types de fonctionnalité Y et W. En effet, selon une variante intéressante, le polyorganosiloxane comporte, outre les motifs (I) et (**II**), au moins un motif (**III**).

Ces motifs (**III**) SiH sont, par exemple, des sites syloxyles résiduels dont l'hydrogène n'a pas réagi pour être substitué par Y ou W. Ce caractère hydrogéné résiduel peut s'avérer utile dans certaines applications des polyorganosiloxanes selon l'invention.

Il convient de souligner que dès lors qu'un motif d'un type donné (**I, II** ou **III** e.g.), est présent dans le polyorganosiloxane à plus d'un exemplaire, les différents exemplaires peuvent être identiques ou différents entre eux.

Compte tenu des valeurs que peuvent prendre les indices a à d attribués aux substituants dans les motifs (**I**), (**II**), (**III**), on doit comprendre que les polyorganosiloxanes selon l'invention peuvent présenter une structure linéaire et/ou ramifiée et/ou cyclique.

Les radicaux R préférés sont : le méthyle, l'éthyle, le n-propyle, l'isopropyle ou le n-butyle, de préférence le méthyle. Plus préférentiellement encore, au moins 80 % en nombre des radicaux R sont des méthyles.

Les radicaux alcoxyles Y préférés sont les éthoxyles.

Pour être encore plus précis sur les polyorganosiloxanes concernés par l'invention, à titre de produits nouveaux, on mentionne tout d'abord ceux formés par des copolymères linéaires statistiques, séquencés ou à bloc, de formule moyenne suivante :

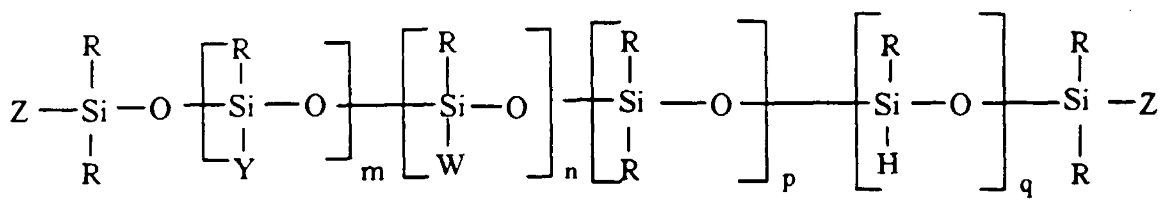

(IV)

dans laquelle :

- les symboles Y, W et R sont tels que définis supra,
- le symbole Z est un radical monovalent choisi parmi les radicaux formés par l'hydrogène et parmi ceux répondant aux définitions de R, Y et W,
- les indices m, n, p et q représentent des nombres entiers ou décimaux positifs et
- la somme $m + n + p + q \geq 3$, de préférence comprise entre 3 et 100,
  le cas de figure dans lequel $p = q = 0$, $m \geq 1$ et $n \leq 50$ étant plus particulièrement préféré,
- $0 \leq m \leq 100$, de préférence $1 \leq m \leq 50$
- $0 \leq n \leq 100$, de préférence $1 \leq n \leq 50$
- $0 \leq p \leq 20$, de préférence $0 \leq p \leq 10$
- $0 \leq q \leq 40$, de préférence $0 \leq q \leq 20$
- avec les conditions selon lesquelles :

  . si $m = 0$, au moins l'un des substituants Z correspond à un radical répondant à la définition caractérisant Y,
  . si $n = 0$, au moins l'un des substituants Z correspond à un radical répondant à la définition caractérisant W,
  . et si $m = n = 0$ et $p + q \geq 1$, alors l'un des substituants Z correspond à un radical répondant à la définition caractérisant Y
  . et l'autre des substituants Z correspondant à la définition caractérisant W.

Parmi les polyorganosiloxanes de formule (**IV**), plus particulièrement préférés, on peut citer ceux pour lesquels $p = q = 0$ et $0{,}1 \leq m/n \leq 5$, de préférence $1 \leq m/n \leq 5$, et plus préférentiellement $1{,}5 \leq m/n \leq 3$.

Une alternative à la structure linéaire des polymères de formule (**IV**) définis ci-dessus, se rapporte aux polyorganosiloxanes constitués par des copolymères cycliques de formule moyenne suivante :

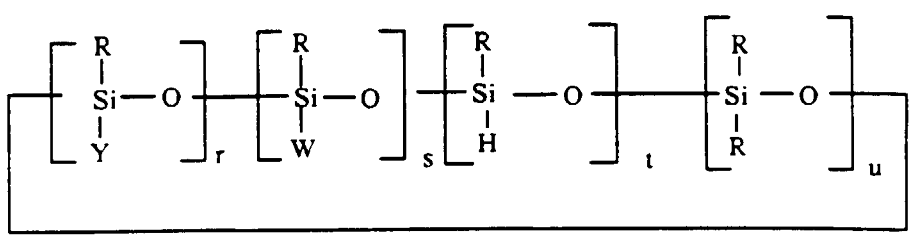

(V)

dans laquelle Y, W et R sont tels que définis supra,

et avec r, s, t et u représentant des nombres entiers ou décimaux positifs :

+ la somme $r + s + t + u \geq 3$, de préférence comprise entre 3 et 8, le cas de figure dans lequel $t = u = 0$ étant plus particulièrement préféré,

+ $1 \leq r \leq 8$, de préférence $1 \leq r \leq 4$

+ $1 \leq s \leq 8$, de préférence $1 \leq s \leq 4$
+ $0 \leq t \leq 8$, de préférence $0 \leq t \leq 4$
+ $0 \leq u \leq 8$, de préférence $0 \leq u \leq 4$.

De préférence, les polyorganosiloxanes selon l'invention sont constitués par des produits correspondants à ceux pour lesquels $R = CH_3$ et $p = u = 0$ dans les formules (**IV**) et (**V**) définies ci-dessus.

Il va de soi que dans ces formules (**IV**) et (**V**), comme déjà indiqué ci-dessus, les radicaux W peuvent être de nature identique ou différente quand $n > 1$ et $s > 1$.

Les mélanges de polyorganosiloxanes du type de ceux définis ci-dessus, rentrent dans le cadre de la présente invention.

Selon un autre de ses aspects, cette invention vise un procédé de préparation de polyorganosiloxanes fonctionnalisés, en particulier multifonctionnalisés, qui peuvent, notamment, être ceux décrits ci-avant.

Avantageusement, ce procédé de fonctionnalisation consiste essentiellement, à faire réagir

. un polyorganosiloxane de départ comprenant des motifs de formule (**II**) tels que définis supra, dans lesquels W représente l'hydrogène,
avec
. au moins un alcool dont dérive la fonctionnalité Y du motif (**I**), et utile à la fois comme réactif et comme solvant réactionnel, en présence d'un catalyseur dont au moins l'un des éléments actifs est choisi parmi les métaux de transition, selon un mécanisme de déshydrogénocondensation (1ère phase).

L'une des originalités de ce procédé réside dans l'utilisation de l'alcool correspondant au groupement Y, à la fois comme réactif et comme solvant réactionnel dans cette phase de déshydrogénocondensation. C'est là l'une des différences essentielles avec la méthode d'alcoolyse connue selon KOAMA et HUMEKI. Conformément à l'invention, il a pu être remarqué que quelle que soit la quantité d'alcool utilisée dans le procédé, il n'est pas possible de transformer toutes les fonctions SiW avec W = H du polyorganosiloxane de départ. Ainsi, après un certain taux de conversion limite, qui varie selon les conditions réactionnelles la stoechiométrie et la nature des réactifs, les SiH résiduels deviennent inactifs vis-à-vis de la déshydrogénocondensation. Par exemple, en présence d'éthanol, le taux de transformation des fonctions SiH initiales, plafonne à 66 %.

Cette déshydrogénocondensation originale conduit donc à un polyorganosiloxane comportant au moins une fonctionnalité rapportée et des fonctions SiH libres. Il s'agit là d'un précurseur ou d'un produit intermédiaire qui constitue à lui-seul et en tant que tel un produit nouveau *per se* conforme à l'invention. Ce précurseur ou ce produit intermédiaire va permettre d'accéder au polyorganosiloxane multifonctionnel dont l'obtention sera détaillée infra.

Avantageusement, le polyorganosiloxane de départ est sélectionné parmi ceux répondant à la formule moyenne suivante :

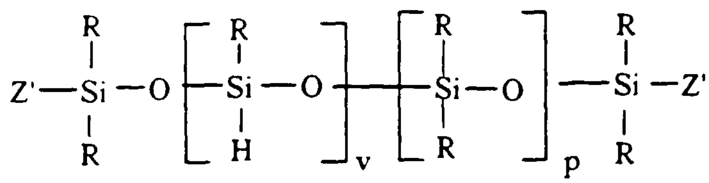

(VI)

dans laquelle :

- les symboles R sont identiques ou différents et sont tels que définis en légende à la formule des motifs (**I**) et (**II**),
- les symboles Z' sont identiques ou différents et correspondent à R ou à l'hydrogène,
- p répond à la même définition que celle donnée supra en légende de la formule (**IV**),
- $v = m + n + q$

avec la condition selon laquelle si $v = 0$, alors $p \geq 1$ et les deux radicaux Z' correspondent à l'hydrogène.

Les polyorganhydrogénosiloxanes de départ servant, par exemple, à la préparation des produits fonctionnalisés cycliques, sont ceux sélectionnés parmi ceux répondant à la formule moyenne suivante :

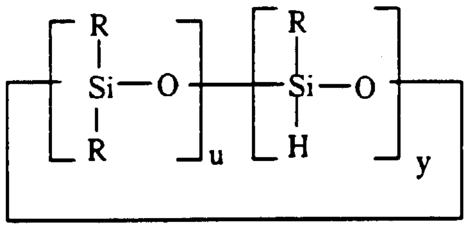

(VII)

dans laquelle :

- les symboles R sont identiques ou différents et sont tels que définis en légende à la formule des motifs (**I**) et (**II**),
- u répond à la même définition que celle donnée supra, en légende de la formule (V),
- $y = r + s + t$ et $y + u \geq 3$.

De façon privilégiée, les alcools mis en oeuvre sont des alcanols linéaires ou ramifiés monohydroxylés (primaire, secondaire, ou tertiaire, de préférence primaire), choisis de préférence parmi la liste suivante : méthanol, éthanol, (iso)propanol, (n)butanol, l'éthanol étant préféré.

Concernant le catalyseur, il est avantageusement choisi parmi ceux contenant au moins l'un des éléments suivants : Pt, Rh, Ru, Pd, Ni et leurs associations, ce catalyseur étant éventuellement couplé à un support inerte ou non.

Selon une disposition préférée de l'invention, le catalyseur est pris dans la famille des catalyseurs au platine utilisés traditionnellement pour réaliser des réactions d'hydrosilylation. Ces catalyseurs platiniques sont amplement décrits dans la littérature. On peut en particulier citer les complexes du platine et d'un produit organique décrits dans les brevets américains US-A-3 159 601, US-A-3 159 602, US-A-3 220 972 et les brevets européens EP-A-57 459 EP-188 978 et EP-A-190 530 ainsi que les complexes du platine et d'organopolysiloxane vinylé décrit dans les brevets américains US-A-3 419 593, US-A-3 715 334, US-A-3 377 432 et US-A-3 814 730. Le catalyseur de karstedt est un exemple de catalyseur platinique approprié pour le procédé selon l'invention. (Brevet US-A-3 775 452 Karstedt).

Les catalyseurs à base de nickel, comme par exemple le nickel de raney, constituent une alternative possible aux catalyseurs platiniques.

S'agissant des conditions réactionnelles, la désydrogénocondensation peut être réalisée dans une large gamme de température allant, par exemple, de O à 200 °C, mais il est clair que l'on préfère qu'elle s'effectue à une température comprise entre 20 et 80°C de préférence entre 40 et 70°C.

La deuxième phase du procédé selon l'invention consiste à préparer un polyorganosiloxane multifonctionnalisé à partir du polyorganosiloxane précurseur ou intermédiaire, produit par deshydrogénocondensation telle qu'expliquée ci-dessus.

Pour ce faire, le polyorganosiloxane transformé par déshydrogénocondensation est mis à réagir avec au moins un composé oléfinique porteur d'au moins une liaison $\pi$, de manière à permettre l'addition du polyorganosiloxane transformé sur ce composé oléfinique selon un mécanisme d'hydrosilylation, en présence d'un catalyseur et, de préférence, à une température comprise entre 5 et 100°C et plus préférentiellement encore entre 20 et 90°C. Cette hydrosilylation succède donc à la déshydrogénocondensation.

Selon une méthodologie préférée, on initie l'hydrosilylation en ajoutant le composé oléfinique comprenant le radical W tel que défini ci-dessus, au polyorganosiloxane alcoxylé intermédiaire une fois que la déshydrogénocondensation est terminée.

En pratique, cet ajout peut se faire lorsque le dégagement d'hydrogène a cessé.

L'alcène réactif peut être formé par un mélange de produits comportant une seule ou plusieurs espèces de radicaux W, qui déterminent la multifonctionnalité du polyorganosiloxane final.

Dans le cas où l'on prévoit plusieurs espèces W, on laisse, de préférence, d'abord réagir l'alcène correspondant à la seconde fonctionnalité, puis une fois que celui-ci a totalement réagi, on incorpore l'alcène correspondant à la troisième fonctionnalité et ainsi de suite.

Au lieu d'être ajouté au milieu réactionnel après la déshydrogénocondensation, le composé oléfinique précurseur de W peut être mis en oeuvre avant que ne débute cette première phase du procédé, ou bien encore pendant celle-ci.

Selon une caractéristique préférée de l'invention, on fait en sorte que l'hydrosilylation soit catalysée par au moins une partie du catalyseur de déshydrogénocondensation et, de préférence, exclusivement par ce catalyseur.

Il s'agit là de l'un des points particulièrement intéressants et inattendus pour le procédé de l'invention. En effet, il est tout à fait surprenant de constater que le catalyseur de déshydrogénocondensation, de préférence de nature platinique, est toujours actif pour cette deuxième phase d'hydrosilylation.

En effet, on sait parfaitement que le catalyseur subit un certain appauvrissement de ces performances lors de la déshydrocondensation. Mais ce qui est encore plus étonnant, c'est que le catalyseur est présent dans le milieu contenant les polyorganosiloxanes porteurs de SiH résiduels de post-déshydrocondensation. Or, en théorie et selon un préjugé largement répandu dans le domaine considéré, le catalyseur d'hydrosilylation, en particulier platinique, n'est actif que s'il est d'abord mis en présence du produit réactif comprenant au moins une liaison $\pi$. De sorte que l'on aurait du observer la formation d'un colloïde inactif dans le cas de l'invention. Mais il n'en n'est rien.

Au contraire, les SiH résiduels sont particulièrement réactifs vis-à-vis des composés oléfiniques rajoutés grâce à l'action du catalyseur d'hydrosilylation, qui est lui-aussi tout à fait efficace. Ce résultat permet d'obtenir, en une seule séquence et sans changer de réacteur, un polyorganosiloxane comportant plusieurs fonctionnalités différentes.

Les composés oléfiniques mis en oeuvre, peuvent être aisément déduits de la définition de W donnée ci-avant. Le choix quant à ce radical est déterminé par les applications visées (une ou plusieurs fonctionnalités différentes).

La phase d'hydrosilylation peut se dérouler, avantageusement, à température ambiante et en masse ou en solution, par exemple dans l'alcool qui a servi de solvant et de réactif à la réaction de déshydrogénocondensation.

En fin de réactions, les polyorganosiloxanes bruts qui sont obtenus peuvent être purifiés notamment par passage sur une colonne remplie d'une résine échangeuse d'ions et/ou par simple dévolatilisation des réactifs introduits en excès et éventuellement du solvant mis en oeuvre, par un chauffage opéré entre 100 et 180 °C sous pression réduite.

Selon un autre de ses aspects, la présente invention concerne l'application des polyorganosiloxanes définis ci-dessus, ainsi que de ceux obtenus par le procédé également décrit ci-avant, à titre de modulateur d'anti-adhérence et/ou d'agent réticulant dans des compositions silicones ou bien encore comme agent de traitement de charge minérale comme la silice, les carbonates, le noir de carbone etc...

En particulier, ces polyorganosiloxanes peuvent être employés à titre d'additifs pour compositions de traitement de surface, en particulier de papier, béton, métal......,

lesdites compositions étant avantageusement des vernis, des peintures, des revêtements anti-adhérents....

La présente invention a également pour objet des compositions, par exemple, silicones, comprenant les polyorganosiloxanes décrits ci-avants, à titre d'ingrédients actifs. Pour être plus précis, on peut citer ;

- les compositions anti-adhérentes pour papier,
- les compositions lubrifiantes,
- les compositions contenant des polymères organiques et les polyorganosiloxanes considérés pourvus de fonctionnalités compatibilisantes.

La présente invention sera mieux comprise à la lumière des exemples qui suivent et qui décrivent les différents polyorganosiloxanes multifonctionnalisés ainsi que leur procédé de préparation. D'autres avantages et variantes de mises en oeuvre de l'invention ressortiront également de ces exemples.

## EXEMPLES :

I - 1ERE PHASE DU PROCEDE SELON L'INVENTION

### Exemple 1: Préparation d'un premier polyorganosiloxane (POS) à fonctionnalités Si-OEt et Si-H = précurseur de POS multifonctionnel obtenu par déshydrogénocondensation

Dans un ballon tricol de 500 ml équipé d'une agitation mécanique, d'un thermomètre, et d'une ampoule de coulée, on charge sous atmosphère d'azote 200 ml d'éthanol préalablement séché sur tamis moléculaire 3 Angströem, et 10 $\mu$l de catalyseur de KARSTEDT (10 % dans l'hexane). Le mélange est agité et on commence à ajouter goutte à goutte le polyméthylhydrosiloxane (40 g, $dp_n$ = 50). On observe un dégagement d'hydrogène important. La vitesse de coulée du fluide Si-H est réglée pour contrôler le débit d'hydrogène et l'exothermie de la réaction. En fin de coulée, le mélange est laissé pendant une heure sous agitation. L'excès d'éthanol est éliminé à l'aide d'un évaporateur rotatif. On récupère 59,5 g d'une huile limpide et incolore, de viscosité 52 mPa.s, correspondant à la fomule moyenne suivante d'après une analyse RMN:

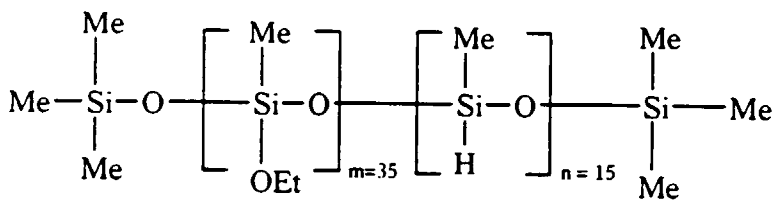

Cette huile présente une très bonne stabilité au stockage à l'abri de l'humidité.

**Exemple 2 : Préparation d'un deuxième POS précurseur à Si - OEt et Si - H**

Les réactifs et le protocole sont les mêmes qu'en exemple 1. Le produit obtenu répond à la même formule à la différence près que m = 32 et n = 18.

**Exemple 3 : Préparation d'un troisième POS à fonctionnalités Si-OiPr et Si-H**

On procède comme dans l'exemple 1 en remplaçant l'éthanol par l'isopropanol (iPr). On obtient 59,2 g d'une huile correspondant à la formule moyenne suivante (RMN) :

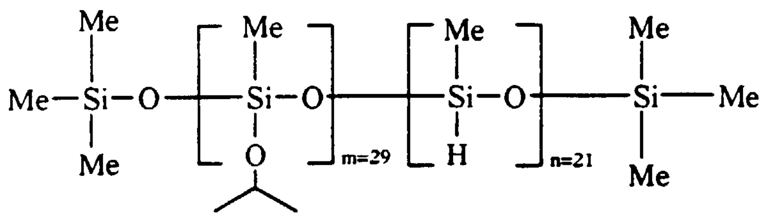

II - 1 ET 2EMES PHASES DU PROCEDE SELON L'INVENTION

**Exemple 4 : Préparation d'un POS à fonctionnalités Si-OEt et Si-EPOXY**

On procède comme dans l'exemple 1 mais à la place d'évaporer l'excès d'alcool, on coule goutte à goutte 35,3 g d'oxyde de vinylcyclohexène (1,5 éq / SiH). Après addition, on chauffe le mélange réactionnel à 60 °C jusqu'à ce que toutes les fonctions Si-H soient consommées. On évapore ensuite l'excès d'alcool et d'oxyde de vinylcyclohexène. On récupère 81 g d'huile limpide et légèrement colorée. L'analyse RMN révèle la structure suivante (RMN) :

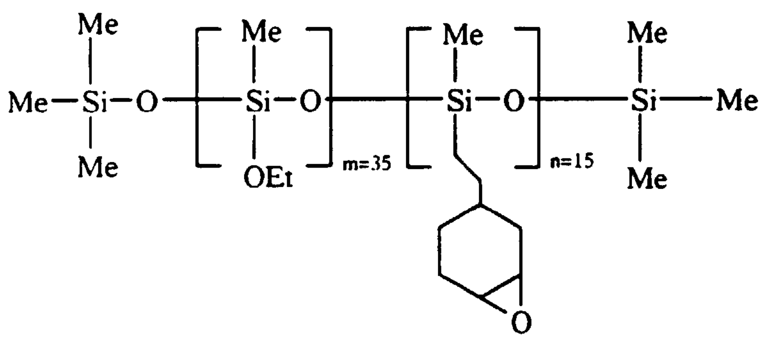

Il est remarquable qu'au cours de cette réaction on n'observe pas d'ouverture des fonctions époxy par les fonctions SiH.

**Exemple 5 : Préparation d'un autre POS à fonctionnalités Si-OEt et Si-EPOXY.**

Les réactifs et le protocole sont identiques à celui de l'exemple 4. Le POS répond à la même formule à la différence près que m = 32 n = 18.

**Exemple 6 : Préparation d'un POS à fonctionnalités Si-OEt Si-méthylbutylfluorohexane.**

On procède comme dans l'exemple 4, en remplaçant l'oxyde de vinylcyclohexène par les deux comonomères suivants :

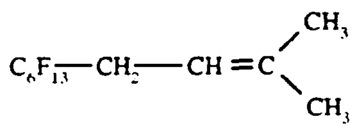

(80 %)

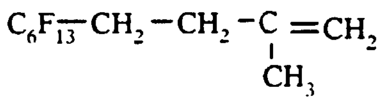

(20 % )

Les quantités de POS SiOEt / SiH et de comonomères mises en oeuvre sont respectivement de 25 g et 153 g.
La température du milieu réactionnel est maintenue à ≈ 70 °C.
On récupère 49,09 g de POS SiOEt/Si-fluoroalkyle de formule :

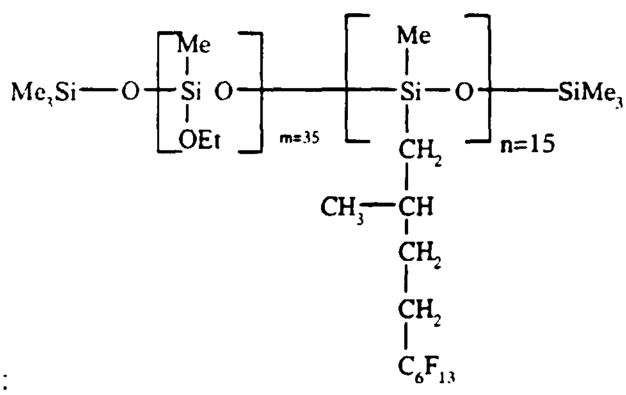

:

**Exemple 7 : Préparation d'un POS à fonctionnalités Si-OEt et Si-chlorure de méthylpropyle**

On procède comme à l'exemple 4, mais en remplaçant l'oxyde de vinylcyclohexène par du chlorure de méthallyle.
Les quantités de réactifs mises en oeuvre sont les suivantes :

- POS SiOEt/SiH = 100 g
- Chlorure de méthallyle = 32,78 g
- [Pt] Karstedt initial = 14 mg.

La température du milieu réactionnel est maintenue à ≈ 25 - 30 °C.
On récupère 101,51 g d'une huile limpide colorée, décolorable sur résine Amberlyst H21.
La RMN révèle la formule suivante :

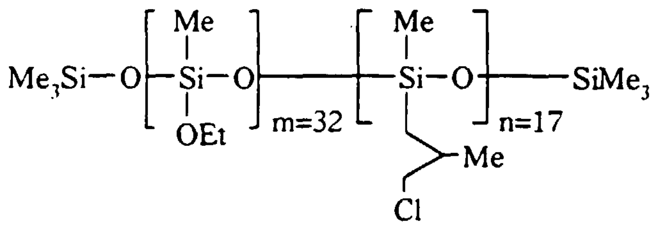

**Exemple 8 : Préparation d'un POS à fonctionnalités Si-OEt, Si-octyle et Si-EPOXY**

*8.1. Synthèse*

On procède comme à l'exemple 4 à la différence près que l'on part de POS : Si O iPr/Si H de formule :

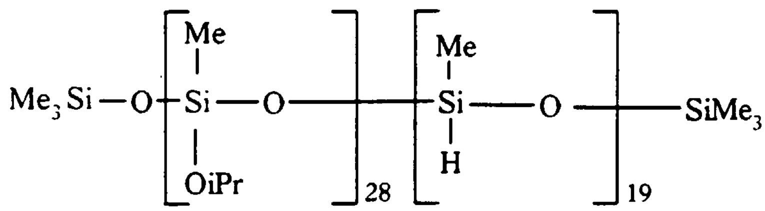

→ Les réactifs mis en oeuvre sont :

| | |
|---|---|
| + POS SiOiPr / SiH | = 78,3 g |
| + octène - 1 | = 16,4 g |
| + oxyde de Vinylcyclohexène (VCHO) | = 18,8 g. |

→ Mode opératoire :

. On additionne tout d'abord l'octène sur un pied de POS et de [Pt] Karstedt dans l'alcool isopropylique
Température = 25° - 30°C.
On laisse la réaction jusqu'à ce qu'une partie de SiH soit consommée (30 mm).
. On chauffe à 70°C pour évaporer alcool et octène en excès.
. On ajoute le VCH.
Température = 25°C, On maintient cette température réactionnelle jusqu'à consommation complète de SiH.
. On réchauffe à 70°C pour éliminer l'excès réactif.

On récupère une huile limpide légèrement colorée de formule :

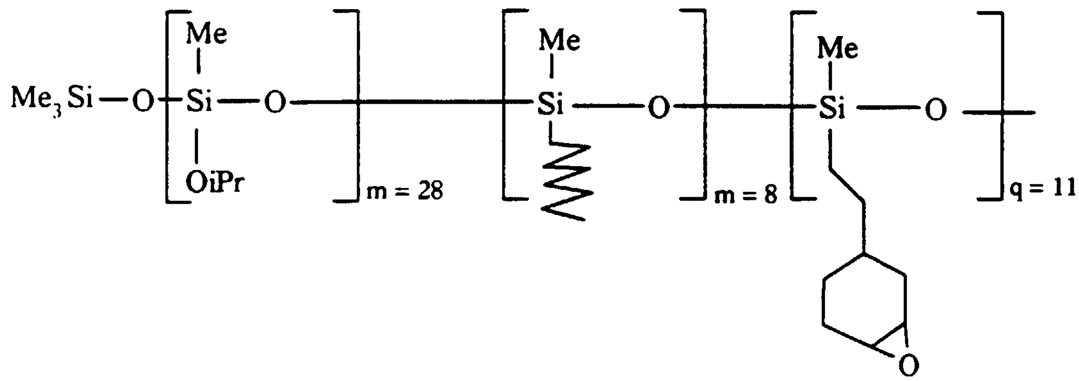

*8.2. Application*

On mesure la réactivité sous UV du POS trifonctionnel obtenu, en présence de 0,3 % de photoamorceur constitué par une solution à 20 % en poids dans l'alcool isopropylique de tétrakis(pentafluorophényl)borate de ditoluyliodonium.
Cette mesure est réalisée à l'aide d'un appareil de mesure du point de gel VNC (Vibrating needle curemeter) commercialisé par la Société RAPRA Ltd, auquel un dispositif d'irradiation UV a été ajouté.
Au cours de la réticulation, l'aiguille du VNC plongée dans le mélange à étudier va rencontrer une résistance qui va se manifester par une diminution de la tension de sortie de l'appareil. On mesure le temps nécessaire pour atteindre une diminution de la tension de sortie de l'appareil à savoir :

diminution de 10,50 et 90 % de la tension, pour une épaisseur à polymériser de 2 mm.

La figure 1 annexée montre la courbe RAPRA obtenue.

. On peut y lire :

| | |
|---|---|
| T10 = | 1,3 Minutes |
| T80 = | 1,8 Minutes |
| T95 = | 2,4 Minutes |
| T100 = | 3,8 Minutes |
| | |
| V10 = | 91,9 mV |
| V95= | 12,1 mV. |

Ces résultats sont tout à fait corrects pour une application revêtement antiadhérence papier.

**Exemple 9 : Préparation d'un POS à fonctionnalités Si-OEt, Si-octyle Si-EPOXY et Si-$(Me)_2$**

→ Les réactifs mis en oeuvre sont les suivants :

- POS SiH/Sime$_2$ de formule :

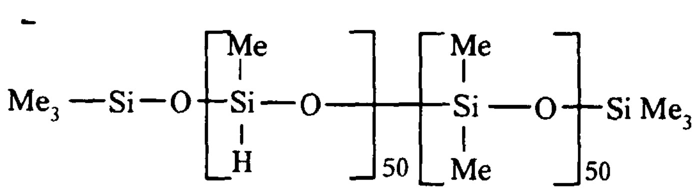

Quantité : 100 g.

- EtOH = 500 g
- Platine (Karstedt à 13,6 %) = 20 ppm/huile soit 14,7 mg
- octène-1 = 29,12 g
- VCHO (oxyde de vinylcyclohexène) = 14,28 g

→ Mode opératoire

+ on charge l'éthanol et le Pt dans un ballon tétracol de 21,
+ on coule ensuite le POS pendant 2 heures puis l'octène
+ on chauffe à 60 °C pendant 1 heure
+ on verse ensuite le VCHO en excès.
+ on chauffe à 70 °C en ajoutant quelques gouttes de [Pt] et on maintient la réaction jusqu'à consommation complète des SiH.
+ on laisse refroidir.
+ on récupère une huile dont l'analyse RMN donne la formule suivante :

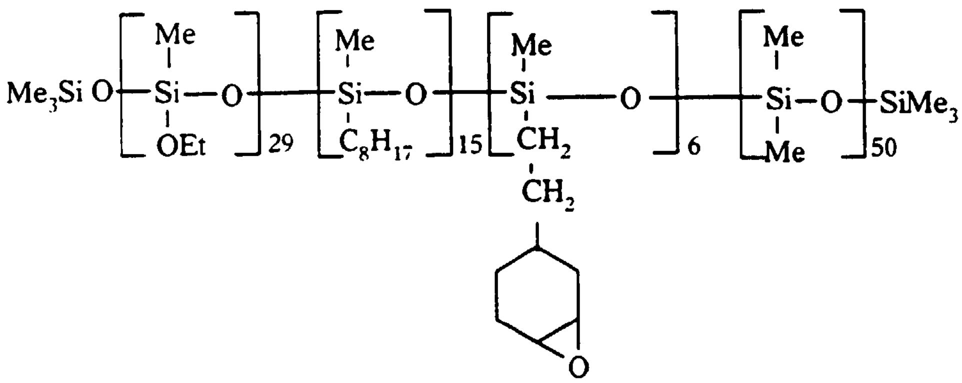

**Exemple 10: Préparation d'un POS à fonctionnalités Si-OEt, Si-octyle et Si-Epoxy**

→ Les réactifs mis en oeuvre sont les suivants :

- POS SiH de formule :

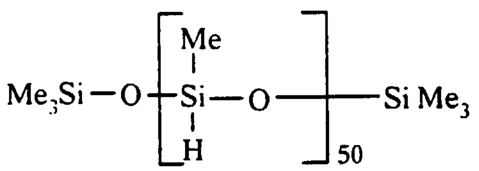

= . 240 g

- EtOH = 1000 g
- [Pt] (Karstedt 13,6 %) = 35,2 mg
- octène = 69,0 g
- VCHO = 70,0 g

→ Mode opératoire

. on charge dans un ballon tricol de 2 l, l'éthanol, le platine et le POS SiH.
. Initialement la température du milieu réactionnel est la température ambiante.
. On introduit lentement (3h) le POS sur l'alcool et le Pt.
. Au fur et à mesure de la coulée la température est portée à environ 40 °C pour être ensuite maintenue à cette valeur pendant l'essentiel de la réaction.

. A la fin de la coulée, l'agitation est maintenue pendant plusieurs heures.
. On ajoute ensuite l'octène progressivement. Température à environ 20 - 40 °C
. Puis enfin on incorpore le VCHO Température à environ 40 °C
. on chauffe à 70 °C pour éliminer les excès de réactifs
. on récupère une huile limpide légèrement colorée dont l'analyse RMN donne la formule :

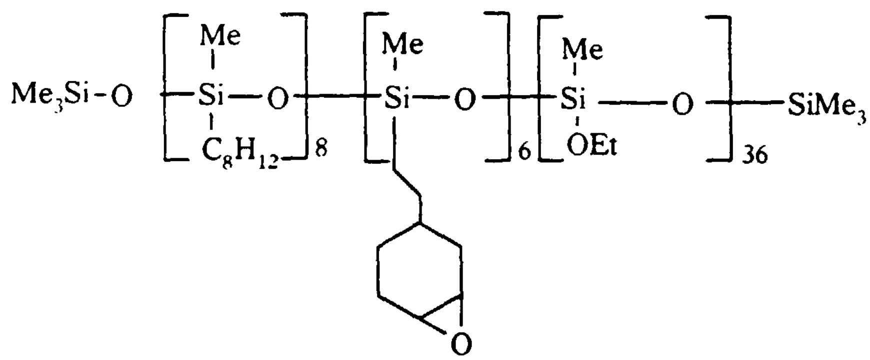

**Revendications**

**1.** Polyorganosiloxane fonctionnalisé comprenant, par molécule,

- $\alpha$ - d'une part, au moins un motif siloxyle fonctionnel de formule :

$$\text{(I)} \qquad (R)_a\ Y\ Si(O)_{\frac{3-a}{2}}$$

dans laquelle

* a = 0, 1 ou 2
* R est un radical hydrocarboné monovalent choisi parmi les alkyles linéaires ou ramifiés, ayant de 1 à 6 atomes de carbone et/ou parmi les aryles, les radicaux R étant identiques ou différents quand a = 2,
* Y est un radical alcoxyle linéaire ou ramifié choisi parmi les alcoxyles en $C_1$-$C_{15}$,

- $\beta$ - et d'autre part, au moins un motif siloxyle fonctionnel de formule :

$$\text{(II)} \qquad (R)_b\ W\ Si(O)_{\frac{3-b}{2}}$$

dans laquelle

* b = 0, 1 ou 2,
* R répond à la même définition que celle donnée supra pour le substituant R du motif (**I**) et peut être identique ou différent de ce dernier,
* W est l'hydrogène ou un radical hydrocarboné monovalent ayant de 2 à 30 atomes de carbone et éventuellement des atomes de S et/ou O et/ou des halogènes et constituant un reste fonctionnel, relié au silicium par une liaison Si-C,

ce reste étant choisi parmi les groupes suivants :

(i) un groupe alkyle, aralkyle, ou aryle substitué par un ou plusieurs atomes d'halogène(s) et/ou par un radical mono ou polyhalogénoalkyle,
(2i) un groupe polyéther-oxyde de formule $—(R^1\text{-}O\text{-})_e—R^2$ avec
$R^1$ représentant un groupe alkylène et,
$R^2$ représentant un atome d'hydrogène ou un groupe alkyle et e = 1 à 5,

(3i) un groupe époxy résultant de l'union d'un atome d'oxygène avec deux atomes de carbone appartenant à un groupe alkyle cycloalkyle ou alcényle,
(4i) un groupe alcoxyalkyle ou aryloxyalkyle (5i) un groupe alkyle mono ou polyhydroxylé et/ou mono ou polycarbonylé et/ou mono ou polyesterifié,
(6i) un groupe phénolique stériquement encombré ou un groupe dérivant d'une benzophénone mono ou dihydroxylée,
(7i) un groupe alcoxysilyle,

- $\gamma$ - et éventuellement au moins un motif siloxyle (**III**) de formule suivante :

$$(R)_c\,(H)_d\,Si(O)_{\frac{4-(c+d)}{2}} \qquad (III)$$

dans laquelle

* $c = 0, 1, 2$ ou 3, $d = 0$ ou 1 et $c + d \leq 3$
* les substituants R étant tels que définis ci-dessus dans les motifs (**I**) et (**II**).

**2.** Polyorganosiloxane selon la revendication 1, caractérisé en ce que le substituant W différent de H du motif (**II**) est choisi parmi les radicaux suivants :

- un radical alkyle linéaire ayant de 8 à 12 atomes de carbone et des radicaux avec des restes fonctionnels halogéné (type (i) et, de formule :

$$-(CH_2)_3-C_6F_5$$

ou

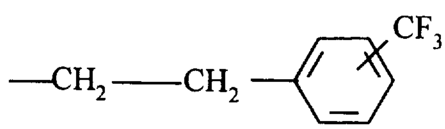

(1) (2)

- un radical avec un reste fonctionnel halogéné (type (i)) et éthérifié (type (2i)) et de formule :

$$-CH_2-CH_2-CH_2-O-CH_2-CF_3$$

(3)

- un radical (poly)éthérifié de type (2i) et de formule :

$$-CH_2-CH_2-CH_2-O-\left[(CH_2)_2-O\right]_5-\left[CH_2-CH(CH_3)\right]_5-O-H\ (\text{ou } CH_3)$$

(4)

ou

$$-CH_2-CH_2-CH_2-O-CH_3$$

(5)

- un radical de type (3i), et de formule :

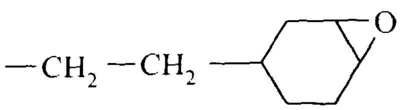 ; 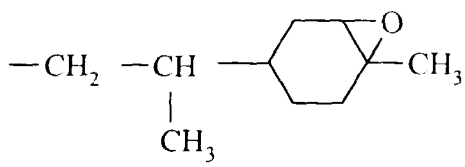 ;

(6) (7)

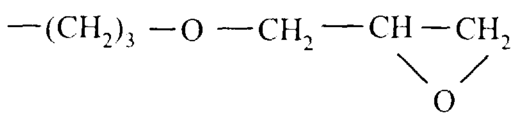 ou 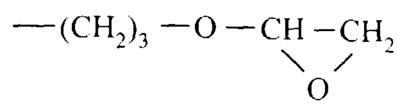

(8) (9)

- un radical aryloxyalkyle de type (4i) et de formule :

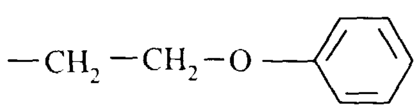 ; 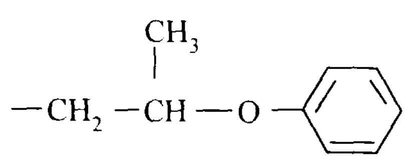 ;

(10) (11)

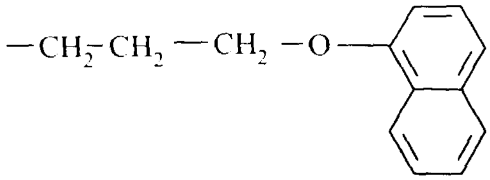 ;

(12)

- un radical alkyle estérifié de type (5i) et de formule :

$-(CH_2)_3-OH$ ; $-CH_2-CH_2-CH_2-O-CO-CH_3$ ;

(13) (14)

$-CH_2-CH_2-CH_2-O-CO-C_2H_5$ ou $-(CH_2)_{10}CO-O-CH_3$

(15) (16)

- un radical de type (6i) et de formule :

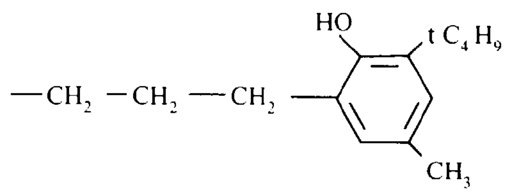

(17)

ou

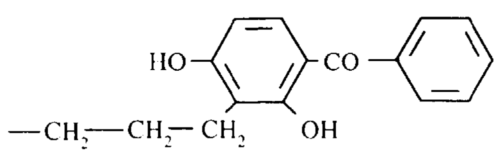

(18)

- un radical de type (7i) et de formule :

$-CH_2-Si(OCH_3)_3$ ou $-CH_2-CH_2-Si(OC_2H_5)_3$

(19) (20)

3. Polyorganosiloxane selon la revendication 1 ou 2 caractérisé en ce qu'il est formé par un copolymère linéaire, statistique, séquencé ou à blocs, de formule moyenne suivante :

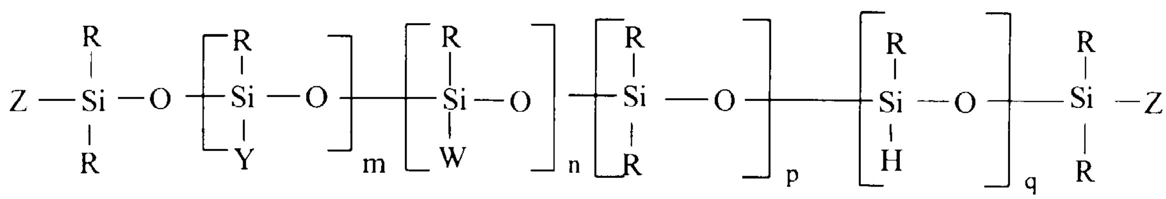

(IV)

dans laquelle :

- les symboles Y, W et R sont tels que définis dans les revendications 1 et 2,
- le symbole Z est un radical monovalent choisi parmi les radicaux formés par l'hydrogène et parmi ceux répondant aux définitions de R, Y et W,
- les indices m, n, p et q représentent des nombres entiers ou décimaux positifs et
- la somme $m + n + p + q \geq 3$,
- $0 \leq m \leq 100$,
- $0 \leq n \leq 100$,
- $0 \leq p \leq 20$,
- $0 \leq q \leq 40$,
- avec les conditions selon lesquelles :

  . si m = 0, au moins l'un des substituants Z correspond à un radical répondant à la définition caractérisant Y,
  . si n = 0, au moins l'un des substituants Z correspond à un radical répondant à la définition caractérisant W,
  . et si m = n = 0 et $p + q \geq 1$, alors l'un des substituants Z correspond à un radical répondant à la définition caractérisant Y
  . et l'autre des substituants Z correspondant à la définition caractérisant W.

4. Polyorganosiloxane selon la revendication 3, caractérisé en ce que p = q = o et $0{,}1 \leq m/n \leq 5$ dans la formule (**IV**).

5. Polyorganosiloxane selon la revendication 1 ou 2 caractérisé en ce qu'il est constitué par un copolymère cyclique de formule moyenne suivante :

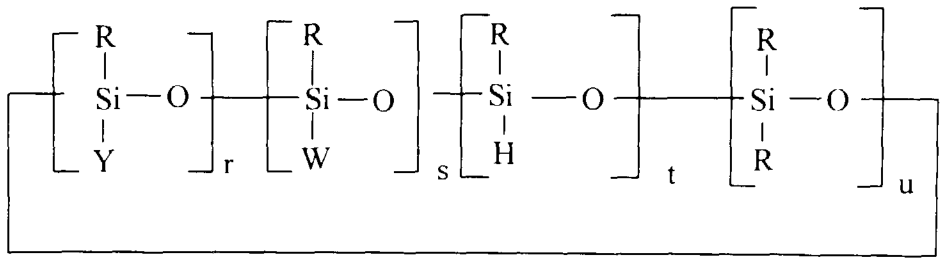

(V)

dans laquelle Y, W et R sont tels que définis dans les revendications 1 et 2, et avec r, s, t et u représentant des nombres entiers ou décimaux positifs :
+ la somme $r + s + t + u \geq 3$,
+ $1 \leq r \leq 8$,
+ $1 \leq s \leq 8$,
+ $0 \leq t \leq 8$,
+ $0 \leq u \leq 8$,

**6.** Polyorganosiloxane selon la revendication 3, 4 ou 5 caractérisé en ce qu'il comprend des produits correspondants à ceux pour lesquels $R = CH_3$ et $p = u = 0$ dans les formules (**IV**) et (**V**).

**7.** Polyorganosiloxane formé par un mélange de polyorganosiloxanes selon l'une quelconque des revendications 1 à 6.

**8.** Procédé de préparation de polyorganosiloxane selon l'une quelconque des revendications 1 à 7 caractérisé en ce qu'il consiste essentiellement,
à faire réagir

. un polyorganosiloxane de départ comprenant des motifs de formule (II) tels que définis dans la revendication 1 et dans lesquels W représente l'hydrogène,
avec
. au moins un alcool de formule YH dont dérive la fonctionnalité Y du motif (I) et utile comme réactif et comme solvant réactionnel, en présence d'un catalyseur dont au moins l'un des éléments actifs est choisi parmi les métaux de transition, selon un mécanisme de déshydrogénocondensation (1ère phase), à une température comprise entre 0 et 200°C.

**9.** Procédé selon la revendication 8, caractérisé en ce que le polyorganosiloxane de départ est sélectionné parmi ceux répondant à la formule moyenne suivante :

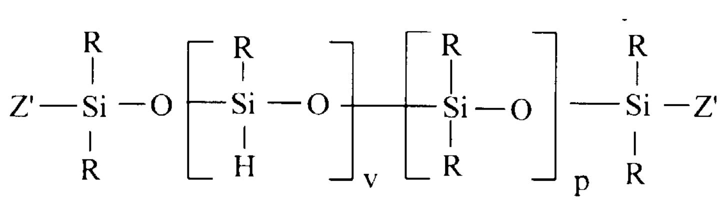

(VI)

dans laquelle :

- les symboles R sont identiques ou différents et sont tels que définis en légende à la formule des motifs (**I**) et (**II**), selon la revendication 1,
- les symboles Z' sont identiques ou différents et correspondent à R ou à l'hydrogène,
- p répond à la même définition que celle donnée supra en légende de la formule (**IV**), selon la revendication 3
- v = m + n + q

avec la condition selon laquelle si v = 0, alors p ≥ 1 et les deux radicaux Z' correspondent à l'hydrogène.

**10.** Procédé selon la revendication 8 caractérisé en ce que le polyorganosiloxane de départ est sélectionné parmi ceux répondant à la formule moyenne suivante :

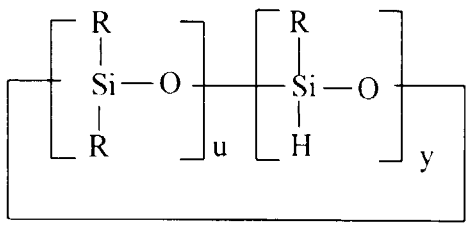

(VII)

dans laquelle :

- les symboles R sont identiques ou différents et sont tels que définis en légende à la formule des motifs (**I**) et (**II**), selon la revendication 1
- u répond à la même définition que celle donnée supra, en légende de la formule (V) selon la revendication 5.
- y = r + s + t et y + u ≥ 3.

**11.** Procédé selon l'une quelconque des revendications 8 à 10 caractérisé en ce que l'alcool est choisi parmi la liste suivante : méthanol, éthanol, (iso)propanol, (n)butanol.

**12.** Procédé selon l'une quelconque des revendications 8 à 11, caractérisé en ce que le catalyseur est choisi parmi ceux contenant au moins l'un des éléments suivants : Pt, Rh; Ru, Pd, Ni et leurs associations, ce catalyseur étant éventuellement couplé à un support inerte ou non.

**13.** Procédé selon l'une quelconque des revendications 8 à 12, caractérisé en ce que la déshydrogénocondensation est effectuée à une température comprise entre 20 et 80°C.

**14.** Procédé selon l'une quelconque des revendications 8 à 13, caractérisé en ce que le polyorganosiloxane transformé par déshydrogénocondensation est mis à réagir avec au moins un composé oléfinique porteur d'au moins une liaison $\pi$, de manière à permettre l'addition du premier sur le second, selon un mécanisme d'hydrosilylation, en présence d'un catalyseur et à une température comprise entre 5 et 100°C.

**15.** Procédé selon la revendication 14, caractérisé en ce que l'hydrosilylation est effectuée à une température comprise entre 20 et 90°C.

**16.** Procédé selon la revendication 14 ou 15 caractérisé en ce que l'on ajoute le composé oléfinique au milieu réactionnel avant, pendant ou après la déshydrogénocondensation.

**17.** Procédé selon l'une quelconque des revendications 14 à 16, caractérisé en ce que l'on fait en sorte que l'hydrosilylation soit catalysée par au moins une partie du catalyseur de déshydrogénocondensation.

**18.** Polyorganosiloxane fonctionnalisé comprenant dans la chaîne et/ou en bout de chaîne d'une part des fonctions alkoxyles Y reliées chacune au silicium par une liaison SiOC et d'autre part des fonctions W, où W est l'hydrogène

ou un radical hydrocarboné monovalent, reliées chacune au silicium par un bain SiH ou SiC, ledit polyorganosiloxane étant caractérisé en ce qu'il est susceptible d'être obtenu par le procédé consistant :
+ dans le cas où W = H :

à faire réagir un polyorganosiloxane de départ comprenant des motifs de formule (II) tels que définis supra dans la revendication 1 et dans lesquels W représente l'hydrogène, avec au moins un alcool de formule YH dont dérive la fonctionnalité Y du motif (I) et utile comme réactif et comme solvant réactionnel, en présence d'un catalyseur dont au moins l'un des éléments actifs est choisi parmi les métaux de transition, selon un mécanisme de déshydrogénocondensation, à une température comprise entre 0 et 200°C,
+ dans le cas où W est un radical hydrocarboné tel que défini supra dans la revendication 1:

- d'une part à faire réagir un polyorganosiloxane de départ comprenant des motifs de formule (II) tels que définis supra dans la revendication 1 et dans lesquels W représente l'hydrogène, avec au moins un alcool de formule YH dont dérive la fonctionnalité Y du motif (I) et utile comme réactif et comme solvant réactionnel, en présence d'un catalyseur dont au moins l'un des éléments actifs est choisi parmi les métaux de transition, selon un mécanisme de déshydrogénocondensation, à une température comprise entre 0 et 200°C (1ère phase), et
- d'autre part à faire réagir le polyorganosiloxane transformé par déshydrogénocondensation dans la 1ère phase, avec au moins un composé oléfinique porteur d'au moins une liaison $\pi$, dont dérive la fonctionnalité W, de manière à permettre l'addition du premier sur le second, selon un mécanisme d'hydrosilylation, en présence d'un catalyseur et à une température comprise entre 5 et 100°C.

**19.** Polyorganosiloxane selon la revendication 18, caractérisé en ce que le catalyseur de déshydrogénocondensation est choisi parmi ceux contenant au moins l'un des éléments suivants : Pt, Rh, Ru, Pd, Ni et leurs associations, ce catalyseur étant éventuellement couplé à un support inerte ou non.

**20.** Polyorganosiloxane selon la revendication 18 ou 19, caractérisé en ce que la déshydrogénocondensation est effectuée à une température comprise entre 20 et 80°C.

**21.** Polyorganosiloxane selon l'une quelconque des revendications 18 à 20, caractérisé en ce que l'hydrosilylation est effectuée à une température comprise entre 20 et 90°C.

**22.** Polyorganosiloxane selon l'une quelconque des revendications 18 à 21, caractérisé en ce que l'on fait en sorte que l'hydrosilylation soit catalysée par au moins une partie du catalyseur de déshydrogénocondensation.

**23.** Application des polyorganosiloxanes selon l'une quelconque des revendications 1 à 7 et/ou des polyorganosiloxanes obtenus par le procédé selon l'une quelconque des revendications 8 à 17 et/ou des polyorganosiloxanes selon l'une quelconque des revendications 18 à 22, à titre de modulateurs d'antiadhérence dans des compositions silicones.

**24.** Application des polyorganosiloxanes selon l'une quelconque des revendications 1 à 7 et/ou des polyorganosiloxanes obtenus par le procédé selon l'une quelconque des revendications 8 à 17 et/ou des polyorganosiloxanes selon l'une quelconque des revendications 18 à 22, à titre d'additifs pour compositions de traitement de surface.

## Patentansprüche

**1.** Funktionalisiertes Polyorganosiloxan, umfassend pro Molekül

- $\alpha$ - einerseits mindestens eine funktionelle Struktureinheit Siloxyl der Formel

$$\text{(I)} \qquad (R)_a\, Y\, Si(O)_{\frac{3-a}{2}}$$

in der

* a = 0, 1 oder 2 ist,
* R einen monovalenten Kohlenwasserstoffrest darstellt, ausgewählt unter den linearen oder verzweigten Alkylen mit 1 bis 6 Kohlenstoffatomen und/oder den Arylen, wobei die Reste R gleich oder verschieden sind, wenn a = 2 ist,

* Y einen linearen oder verzweigten Rest Alkoxyl bedeutet, ausgewählt unter den Alkoxylen mit 1 bis 15 Kohlenstoffatomen, und

- β - andererseits mindestens eine funktionelle Struktureinheit Siloxyl der Formel

$$\text{(II)} \qquad (R)_b\, W\, Si(O)_{\frac{3-b}{2}}$$

in der

* b 0, 1 oder 2 ist,
* R die gleiche Definition wie oben beim Substituenten R der Struktureinheit (I) angegeben besitzt und zu diesem letzteren gleich oder verschieden sein kann,
* W Wasserstoff oder einen monovalenten Kohlenwasserstoffrest mit 2 bis 30 Kohlenstoffatomen und gegebenenfalls Atomen von S und/oder 0 und/oder Halogenen darstellt und einen funktionellen Rest bildet, der mit dem Silicium durch eine Bindung Si-C verbunden ist,

wobei dieser Rest unter den folgenden Gruppen ausgewählt wird:

(i) einer Gruppe Alkyl, Aralkyl oder Aryl, substituiert durch ein oder mehrere Halogenatom(e) und/oder durch einen Rest Mono- oder Polyhalogenalkyl,
(2i) einer Gruppe Polyetheroxid der Formel $-(R^1\text{-}O\text{-})_e\text{-}R^2$, worin

- $R^1$ eine Gruppe Alkylen darstellt,
- $R^2$ ein Wasserstoffatom oder eine Gruppe Alkyl bedeutet,
- und e = 1 bis 5 ist,

(3i) einer Gruppe Epoxy, resultierend aus der Vereinigung eines Sauerstoffatoms mit zwei Kohlenstoffatomen, die von einer Gruppe Alkyl, Cycloalkyl oder Alkenyl stammen,
(4i) einer Gruppe Alkoxyalkyl oder Aryloxyalkyl,
(5i) einer Gruppe Alkyl, mono- oder polyhydroxyliert und/ oder mono- oder polycarbonyliert und/oder mono- oder polyverestert,
(6i) einer sterisch sperrigen phenolischen Gruppe oder einer Gruppe, die sich von einem mono- oder dihydroxylierten Benzophenon ableitet,
(7i) einer Gruppe Alkoxysilyl, und

- γ - gegebenenfalls mindestens eine Struktureinheit Siloxyl (III) der folgenden Formel

$$(R)_c\, (H)_d\, Si(O)_{\frac{4-(c+d)}{2}} \qquad \text{(III)}$$

in der

* $c = 0, 1, 2$ oder 3, $d = 0$ oder 1 und $c + d \leq 3$ sind,
* die Substituenten R wie oben bei den Struktureinheiten (I) und (II) definiert sind.

**2.** Polyorganosiloxan nach Anspruch 1, dadurch gekennzeichnet, daß der Substituent W der Struktureinheit (II) von H verschieden ist und ausgewählt wird unter den folgenden Resten:

- einem linearen Rest Alkyl mit 8 bis 12 Kohlenstoffatomen und den Resten mit funktionellen, halogenierten Resten [Typ (i)] und der Formel:

$-(CH_2)_3-C_6F_5$ oder 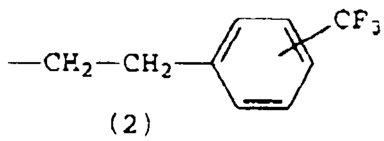

(1) (2)

- einem Rest mit einem funktionellen, halogenierten Rest [Typ (i)] und veretherten Rest [Typ (2i)] und der Formel

$$-CH_2-CH_2-CH_2-O-CH_2-CF_3$$

(3)

- einem (poly)veretherten Rest vom Typ (2i) und der Formel

$$-CH_2-CH_2-CH_2-O-\left[(CH_2)_2-O\right]_5-\left[CH_2-CH(CH_3)\right]_5-O-H\ (\text{oder } CH_3)$$

(4)

oder

$$-CH_2-CH_2-CH_2-O-CH_3$$

(5)

- einem Rest vom Typ (3i) und der Formel

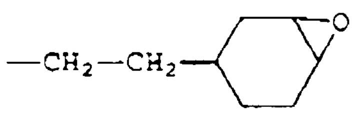 ; 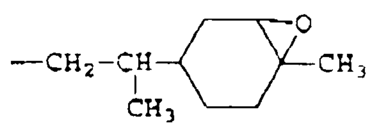

(6) (7)

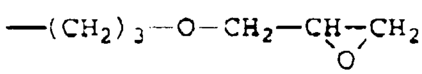 oder 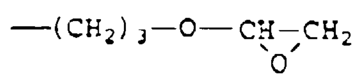

(8) (9)

- einem Rest Aryloxyalkyl vom Typ (4i) und der Formel

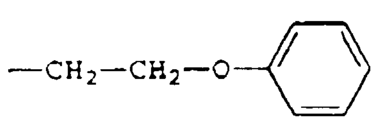 ; 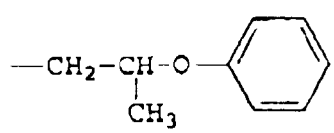

(10) (11)

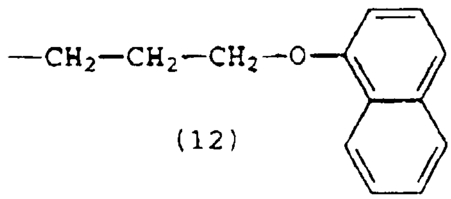

(12)

- einem veresterten Rest Alkyl vom Typ (5i) und der Formel

$-(CH_2)_3\text{-}OH$ (13) ; $-CH_2-CH_2-CH_2-O-CO-CH_3$ (14)

$-CH_2-CH_2-CH_2-O-CO-C_2H_5$ (15) oder $-(CH_2)_{10}-CO-O-CH_3$ (16)

- einem Rest vom Typ (6i) und der Formel

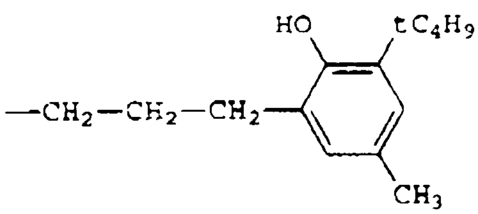

(17)

oder

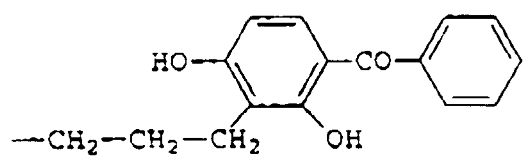

(18)

- einem Rest vom Typ (7i) und der Formel

$-CH_2-Si(OCH_3)_3$ (19) oder $-CH_2-CH_2-Si(OC_2H_5)_3$ (20)

3. Polyorganosiloxan nach Anspruch 1 oder 2, dadurch gekennzeichnet, daß es aus einem linearen, statistisch in Sequenzen oder Blöcken, Copolymer der folgenden mittleren Formel (IV)

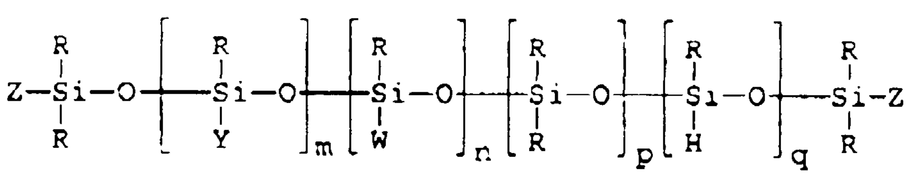

(IV)

gebildet wird,
in der

- die Symbole Y, W und R wie in den Ansprüchen 1 und 2 definiert sind,

  - das Symbol Z ein monovalenter Rest ist, ausgewählt unter den Resten, die durch Wasserstoff und die Reste gebildet werden, die den Definitionen von R, Y und W entsprechen,
  - die Indices m, n, p und q positive ganze Zahlen oder Dezimalzahlen darstellen, und

- die Summe $m + n + p + q \geq 3$ ist,
- $0 \leq m \leq 100$ ist,
- $0 \leq n \leq 100$ ist,
- $0 \leq p \leq 20$ ist,
- $0 \leq q \leq 40$ ist,
- mit den Bedingungen, nach denen:

  . wenn $m = 0$ ist, mindestens einer der Substituenten Z einem Rest mit der Definition von Y entspricht,
  . wenn $n = 0$ ist, mindestens einer der Substituenten Z einem Rest mit der Definition von W entspricht, und
  . wenn $m = n = 0$ und $p + q \geq 1$ sind, dann einer der Substituenten Z einem Rest mit der Definition von Y entspricht und
  . der andere der Substituenten Z einem Rest mit der Definition von W entspricht.

**4.** Polyorganosiloxan nach Anspruch 3, dadurch gekennzeichnet, daß in der Formel (IV) $p = q = 0$ und $0{,}1 \leq m/n \leq 5$ sind.

**5.** Polyorganosiloxan nach Anspruch 1 oder 2, dadurch gekennzeichnet, daß es aus einem cyclischen Copolymer der folgenden mittleren Formel (V)

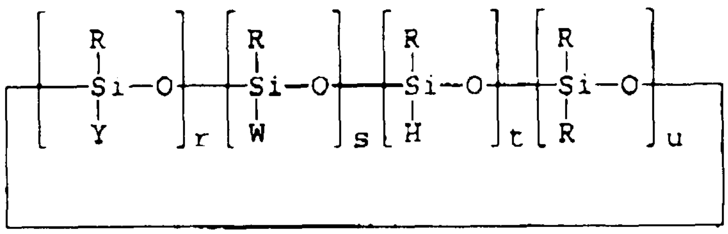

(V)

gebildet wird, in der
Y, W und R wie in den Ansprüchen 1 und 2 definiert sind, und r, s, t und u positive ganze Zahlen oder Dezimalzahlen darstellen,

- die Summe $r + s + t + u \geq 3$ ist,
- $1 \leq r \leq 8$ ist,
- $1 \leq s \leq 8$ ist,
- $0 \leq t \leq 8$ ist,
- $0 \leq u \leq 8$ ist.

**6.** Polyorganosiloxan nach Anspruch 3, 4 oder 5, dadurch gekennzeichnet, daß es Produkte umfaßt, die denen entsprechen, worin in den Formeln (IV) und (v) $R = CH_3$ und = u = 0 sind.

**7.** Polyorganosiloxan, gebildet aus einer Mischung von Polyorganosiloxanen nach irgendeinem der Ansprüche 1 bis 6.

**8.** Verfahren zur Herstellung von Polyorganosiloxan nach irgendeinem der Ansprüche 1 bis 7, dadurch gekennzeichnet, daß es im wesentlichen darin besteht,

. ein Polyorganosiloxan als Ausgangsstoff, das Struktureinheiten der Formel (II) wie in Anspruch 1 definiert umfaßt und worin W Wasserstoff darstellt, mit
. mindestens einem Alkohol der Formel YH, von dem sich die Funktionalität Y der Struktureinheit (I) ableitet, verwendet als Reaktand und als Lösungsmittel der Reaktion, in Anwesenheit eines Katalysators, bei dem

mindestens eines der aktiven Elemente unter den Übergangsmetallen ausgewählt wird, gemäß einem Mechanismus der Dehydrokondensation (1. Phase) bei einer Temperatur zwischen 0 °C und 200 °C zur Reaktion zu bringen.

**9.** Verfahren nach Anspruch 8, dadurch gekennzeichnet, daß das Polyorganosiloxan als Ausgangsstoff unter denjenigen ausgewählt wird, die der folgenden mittleren Formel (VI)

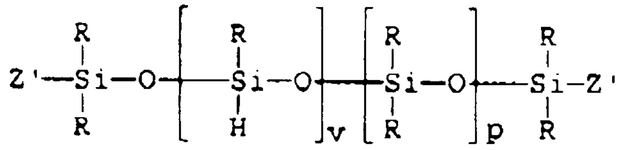

(VI)

entsprechen, in der

- die Symbole R gleich oder verschieden und so definiert sind wie bei der Erläuterung der Formel der Struktureinheiten (I) und (II) gemäß Anspruch 1 angegeben,
- die Symbole Z' gleich oder verschieden sind und R oder Wasserstoff entsprechen,
- p der gleichen Definition entspricht wie oben bei der Erläuterung der Formel (IV) gemäß Anspruch 3 angegeben,
- v = m + n + q ist,

mit der Bedingung, wonach in dem Fall, wo v = 0 ist, dann p ≥ 1 ist und die zwei Reste Z' Wasserstoff entsprechen.

**10.** Verfahren nach Anspruch 8, dadurch gekennzeichnet, daß das Polyorganosiloxan als Ausgangsstoff unter denjenigen ausgewählt wird, die der folgenden mittleren Formel (VII)

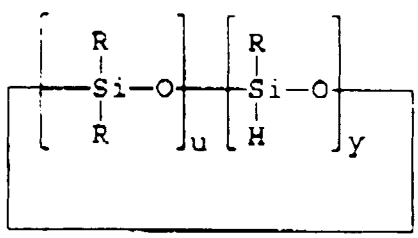

(VII)

entsprechen, in der

- die Symbole R gleich oder verschieden und so definiert sind wie bei der Erläuterung der Formel der Struktureinheiten (I) und (II) gemäß Anspruch 1 angegeben,
- u der gleichen Definition entspricht wie oben bei der Erläuterung der Formel (v) gemäß Anspruch 5 angegeben,
- y = r + s + t und y + u ≥ 3 sind.

**11.** Verfahren nach irgendeinem der Ansprüche 8 bis 10, dadurch gekennzeichnet, daß der Alkohol aus der folgenden Liste gewählt wird: Methanol, Ethanol, (Iso)propanol, (n)Butanol.

**12.** Verfahren nach irgendeinem der Ansprüche 8 bis 11, dadurch gekennzeichnet, daß der Katalysator unter denjenigen ausgewählt wird, die mindestens eines der folgenden Elemente umfassen; Pt, Rh, Ru, Pd, Ni und ihre Assoziationen, wobei dieser Katalysator gegebenenfalls mit einem inerten oder nicht inerten Träger gekoppelt ist.

**13.** Verfahren nach irgendeinem der Ansprüche 8 bis 12, dadurch gekennzeichnet, daß die Dehydrokondensation bei einer Temperatur zwischen 20 °C und 80 °C durchgeführt wird.

**14.** Verfahren nach irgendeinem der Ansprüche 8 bis 13, dadurch gekennzeichnet, daß das durch die Dehydrokondensation umgewandelte Polyorganosiloxan mit mindestens einer olefinischen Verbindung, die mindestens eine Bindung $\pi$ trägt, in einer Weise zur Reaktion gebracht wird, die die Zugabe des ersten zu dem zweiten gemäß einem Mechanismus der Hydrosilylierung in Anwesenheit eines Katalysators und bei einer Temperatur zwischen 5 °C und 100 °C ermöglicht.

**15.** Verfahren nach Anspruch 14, dadurch gekennzeichnet, daß die Hydrosilylierung bei einer Temperatur zwischen 20 °C und 90 °C durchgeführt wird.

**16.** Verfahren nach Anspruch 14 oder 15, dadurch gekennzeichnet, daß man die olefinische Verbindung vor, während oder nach der Dehydrokondensation zu dem Reaktionsmedium gibt.

**17.** Verfahren nach irgendeinem der Ansprüche 14 bis 16, dadurch gekennzeichnet, daß man es so einrichtet, daß die Hydrosilylierung durch mindestens einen Teil des Katalysators der Dehydrokondensation katalysiert wird.

**18.** Funktionalisiertes Polyorganosiloxan, das in der Kette und/ oder am Ende der Kette einerseits Funktionen Alkoxyl Y, jeweils verbunden mit dem Silicium durch eine Bindung SiOC, und andererseits Funktionen W umfaßt, worin W Wasserstoff oder einen monovalenten Kohlenwasserstoffrest darstellt, jeweils verbunden mit dem Silicium durch eine Bindung SiH oder SiC, wobei das genannte Polyorganosiloxan dadurch gekennzeichnet ist, daß es fähig ist, durch das Verfahren erhalten zu werden, das besteht in:
+ in dem Fall, wo W = H ist:

- der Reaktion eines Polyorganosiloxans als Ausgangsstoff, das Struktureinheiten der Formel (II) umfaßt, die wie oben in Anspruch 1 definiert sind und worin W Wasserstoff ist, mit mindestens einem Alkohol der Formel YH, von dem sich die Funktionalität Y der Struktureinheit (I) ableitet, der als Reaktand und als Lösungsmittel der Reaktion dient, wobei man in Anwesenheit eines Katalysators, bei dem mindestens eines der aktiven Elemente unter den Übergangsmetallen ausgewählt wird, gemäß einem Mechanismus der Dehydrokondensation bei einer Temperatur zwischen 0 °C und 200 °C arbeitet; und

+ in dem Fall, wo W ein wie oben in Anspruch 1 definierter Kohlenwasserstoffrest ist:

- einerseits der Reaktion eines Polyorganosiloxans als Ausgangsstoff, das Struktureinheiten der Formel (II) umfaßt, die wie oben in Anspruch 1 definiert sind und worin W Wasserstoff ist, mit mindestens einem Alkohol der Formel YH, von dem sich die Funktionalität Y der Struktureinheit (I) ableitet, der als Reaktand und als Lösungsmittel der Reaktion dient, wobei man in Anwesenheit eines Katalysators, bei dem mindestens eines der aktiven Elemente unter den Übergangsmetallen ausgewählt wird, gemäß einem Mechanismus der Dehydrokondensation bei einer Temperatur zwischen 0 °C und 200 °C (1. Phase) arbeitet, und
- andererseits der Reaktion des durch die Dehydrokondensation in der 1. Phase umgewandelten Polyorganosiloxans mit mindestens einer olefinischen Verbindung, die mindestens eine Bindung $\pi$ trägt und von der sich die Funktionalität W ableitet, in einer Weise, die die Zugabe des ersten zu dem zweiten gemäß einem Mechanismus der Hydrosilylierung in Anwesenheit eines Katalysators und bei einer Temperatur zwischen 5 °C und 100 °C ermöglicht.

**19.** Polyorganosiloxan nach Anspruch 18, dadurch gekennzeichnet, daß der Katalysator der Dehydrokondensation unter denjenigen ausgewählt wird, die mindestens eines der folgenden Elemente umfassen; Pt, Rh, Ru, Pd, Ni und ihre Assoziationen, wobei dieser Katalysator gegebenenfalls mit einem inerten oder nicht inerten Träger gekoppelt ist.

**20.** Polyorganosiloxan nach Anspruch 18 oder 19, dadurch gekennzeichnet, daß die Dehydrokondensation bei einer Temperatur zwischen 20 °C und 80 °C durchgeführt wird.

**21.** Polyorganosiloxan nach irgendeinem der Ansprüche 18 bis 20, dadurch gekennzeichnet, daß die Hydrosilylierung bei einer Temperatur zwischen 20 °C und 90 °C durchgeführt wird.

**22.** Polyorganosiloxan nach irgendeinem der Ansprüche 18 bis 21, dadurch gekennzeichnet, daß man es so einrichtet, daß die Hydrosilylierung durch mindestens einen Teil des Katalysators der Dehydrokondensation katalysiert wird.

**23.** Verwendung der Polyorganosiloxane nach irgendeinem der Ansprüche 1 bis 7 und/oder der Polyorganosiloxane, erhalten durch das Verfahren nach irgendeinem der Ansprüche 8 bis 17 und/oder der Polyorganosiloxane nach

irgendeinem der Ansprüche 18 bis 22 als Antihaftmodulatoren in Silicon-Zusammensetzungen.

**24.** Verwendung der Polyorganosiloxane nach irgendeinem der Ansprüche 1 bis 7 und/oder der Polyorganosiloxane, erhalten durch das Verfahren nach irgendeinem der Ansprüche 8 bis 17 und/oder der Polyorganosiloxane nach irgendeinem der Ansprüche 18 bis 22 als Zusatzstoffe für Zusammensetzungen zur Behandlung von Oberflächen.

## Claims

**1.** Functionalized polyorganosiloxane comprising, per molecule,

- α - on the one hand, at least one functional siloxy unit of formula:

$$\text{(I)} \qquad (R)_a\ Y\ Si(O)_{\frac{3-a}{2}}$$

in which

* a = 0, 1 or 2
* R is a monovalent hydrocarbon radical chosen from linear or branched alkyls having from 1 to 6 carbon atoms and/or from aryls, the R radicals being identical or different when a = 2,
* Y is a linear or branched alkoxy radical chosen from $C_1$-$C_{15}$ alkoxys,

- β - and, on the other hand, at least one functional siloxy unit of formula:

$$\text{(II)} \qquad (R)_b\ W\ Si(O)_{\frac{3-b}{2}}$$

in which

* b = 0, 1 or 2,
* R corresponds to the same definition as that given above for the R substituent of the unit (I) and can be identical to or different from the latter,
* W is hydrogen or a monovalent hydrocarbon radical having from 2 to 30 carbon atoms and optionally S and/or 0 and/or halogen atoms and constituting a functional residue, bonded to the silicon via an Si-C bond,

this residue being chosen from the following groups:

(i) an alkyl, aralkyl or aryl group substituted by one or a number of halogen atom(s) and/or by a mono- or polyhaloalkyl radical,
(2i) a polyether ether group of formula

$$—(R^1\text{-O-})_e—R^2$$

with

$R^1$ representing an alkylene group and,
$R^2$ representing a hydrogen atom or an alkyl group
and e = 1 to 5,

(3i) an epoxy group resulting from the union of an oxygen atom with two carbon atoms belonging to an alkyl, cycloalkyl or alkenyl group,
(4i) an alkoxyalkyl or aryloxyalkyl group,
(5i) a mono- or polyhydroxylated and/or mono- or polycarbonylated and/or mono- or polyesterified alkyl group,
(6i) a sterically hindered phenol group or a group deriving from a mono- or dihydroxylated benzophenone,

(7i) an alkoxysilyl group,

- γ - and, optionally, at least one siloxy unit (III) of following formula:

$$(R)_c\,(H)_d\,Si(O)_{\frac{4-(c+d)}{2}} \qquad (III)$$

in which

* $c = 0, 1, 2$ or $3$, $d = 0$ or $1$ and $c + d \leq 3$,
* the R substituents being as defined above in the units (I) and (II).

**2.** Polyorganosiloxane according to claim 1, characterized in that the W substituent, other than H, of the unit (II) is chosen from the following radicals:

- a linear alkyl radical having from 8 to 12 carbon atoms and radicals with halogenated functional residues (type (i)) and of formula:

$$-(CH_2)_3-C_6F_5$$

(1)

or

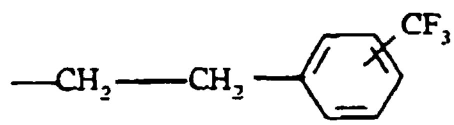

(2)

- a radical with a halogenated (type (i)) and etherified (type (2i)) functional residue and of formula:

$$-CH_2-CH_2-CH_2-O-CH_2-CF_3$$

(3)

- a (poly)etherified radical of type (2i) and of formula:

$$-CH_2-CH_2-CH_2-O-\left[(CH_2)_2-O\right]_5-\left[CH_2-CH(CH_3)\right]_5-O-H \text{ (or } CH_3)$$

(4)

or

$$-CH_2-CH_2-CH_2-O-CH_3$$

(5)

- a radical of type (3i), and of formula:

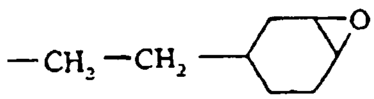 ; 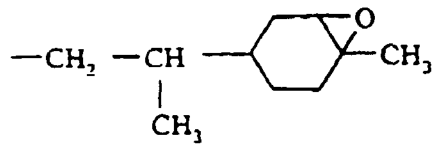 ;

(6) (7)

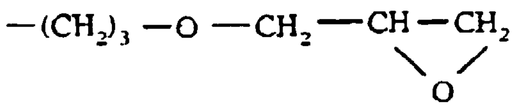 or 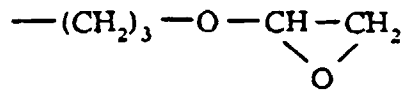

(8) (9)

- an aryloxyalkyl radical of type (4i) and of formula:

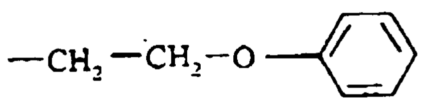 ; 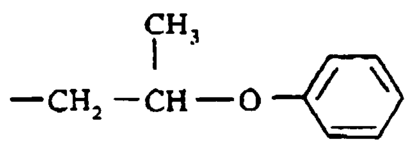 ;

(10) (11)

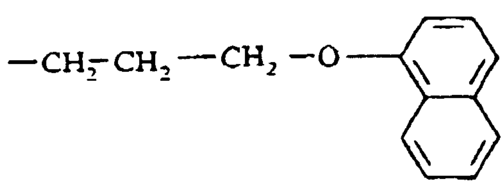 ;

(12)

- an esterified alkyl radical of type (5i) and of formula:

$-(CH_2)_3-OH$ ; $-CH_2-CH_2-CH_2-O-CO-CH_3$ ;

(13) (14)

$$-CH_2-CH_2-CH_2-O-CO-C_2H_5$$

(15)

or

$$-(CH_2)_{10}-CO-O-CH_3$$

(16)

- a radical of type (6i) and of formula:

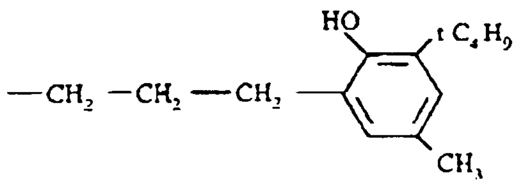

(17)

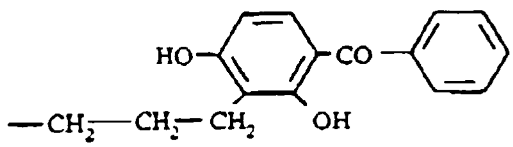

(18)

- a radical of type (7i) and of formula:

$$-CH_2-Si(OCH_3)_3$$

(19)

or

$$-CH_2-CH_2-Si(OC_2H_5)_3$$

(20)

3. Polyorganosiloxane according to claim 1 or 2, characterized in that it is formed by a statistical, sequenced or block linear copolymer with the following average formula:

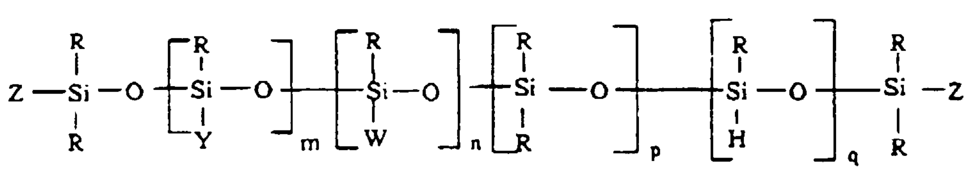

(IV)

in which:

- the symbols Y, W and R are as defined in claims 1 and 2,
- the symbol Z is a monovalent radical chosen from the radicals formed by hydrogen and from those corresponding to the definitions of R, Y and W,
- the indices m, n, p and q represent positive whole or decimal numbers and
- the sum $m + n + p + q \geq 3$,
- $0 \leq m \leq 100$,
- $0 \leq n \leq 100$,
- $0 \leq p \leq 20$,
- $0 \leq q \leq 40$,
- with the conditions according to which:

  . if m = 0, at least one of the Z substituents corresponds to a radical corresponding to the definition characterizing Y,
  . if n = 0, at least one of the Z substituents corresponds to a radical corresponding to the definition characterizing W,
  . and if m = n = 0 and $p + q \geq 1$, then one of the Z substituents corresponds to a radical corresponding to the definition characterizing Y
  . and the other of the Z substituents corresponding to the definition characterizing W.

**4.** Polyorganosiloxane according to claim 3, characterized in that p = q = 0 and $0.1 \leq m/n \leq 5$ in the formula (IV).

**5.** Polyorganosiloxane according to claim 1 or 2, characterized in that it consists of a cyclic copolymer of following average formula:

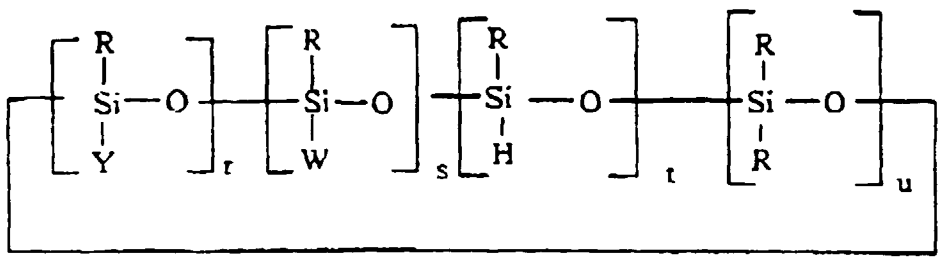

**(V)**

in which Y, W and R are as defined in claims 1 and 2,
and with r, s, t and u representing positive whole or decimal numbers:
+ the sum $r + s + t + u \geq 3$,
+ $1 \leq r \leq 8$,
+ $1 \leq s \leq 8$,
+ $0 \leq t \leq 8$,
+ $0 \leq u \leq 8$.

**6.** Polyorganosiloxane according to claim 3, 4 or 5, characterized in that it comprises products corresponding to those in which $R = CH_3$ and p = u = 0 in the formulae (IV) and (V).

**7.** Polyorganosiloxane formed by a mixture of polyorganosiloxanes according to any one of claims 1 to 6.

**8.** Process for the preparation of polyorganosiloxane according to any one of claims 1 to 7, characterized in that it consists essentially

in reacting

. a starting polyorganosiloxane comprising units of formula (II) as defined in claim 1, in which units W represents hydrogen,
with

. at least one alcohol of formula YH from which the functionality Y of the unit (I) derives and which is useful as reactant and as reaction solvent, in the presence of a catalyst, at least one of the active elements of which is chosen from the transition metals, according to a dehydrogenation/condensation mechanism (1st stage), at a temperature of between 0 and 200°C.

**9.** Process according to claim 8, characterized in that the starting polyorganosiloxane is selected from those corresponding to the average formula:

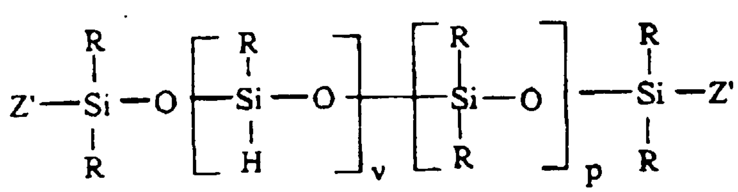

(VI)

in which:

- the R symbols are identical or different and are as defined in the legend to the formula of the units (I) and (II), according to claim 1,
- the Z' symbols are identical or different and correspond to R or to hydrogen,
- p corresponds to the same definition as that given above in the legend to the formula (IV), according to claim 3,
- $v = m + n + q$,

with the condition according to which, if $v = 0$, then $p \geq 1$ and the two Z' radicals correspond to hydrogen.

**10.** Process according to claim 8, characterized in that the starting polyorganosiloxane is selected from those corresponding to the following average formula:

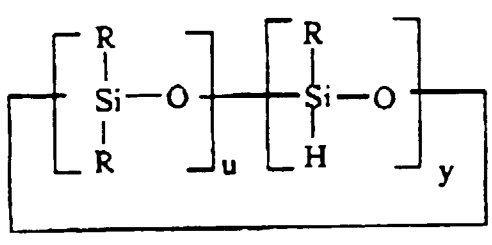

(VII)

in which

- the R symbols are identical or different and are as defined in the legend to the formula of the units (I) and (II), according to claim 1,
- u corresponds to the same definition as that given above in the legend to the formula (V), according to claim 5,

- $y = r + s + t$ and $y + u \geq 3$.

**11.** Process according to any one of claims 8 to 10, characterized in that the alcohol is chosen from the following list: methanol, ethanol, (iso)propanol or (n-)butanol.

**12.** Process according to any one of claims 8 to 11, characterized in that the catalyst is chosen from those containing at least one of the following elements: Pt, Rh, Ru, Pd, Ni and their combinations, this catalyst optionally being coupled to a support, which may or may not be inert.

**13.** Process according to any one of claims 8 to 12, characterized in that the dehydrogenation/- condensation is carried out at a temperature of between 20 and 80°C.

**14.** Process according to any one of claims 8 to 13, characterized in that the polyorganosiloxane which has been converted by dehydrogenation/condensation is reacted with at least one olefinic compound carrying at least one $\pi$ bond, so as to make it possible to add the first to the second, according to a hydrosilylation mechanism, in the presence of a catalyst and at a temperature of between 5 and 100°C.

**15.** Process according to claim 14, characterized in that the hydrosilylation is carried out at a temperature of between 20 and 90°C.

**16.** Process according to claim 14 or 15, characterized in that the olefinic compound is added to the reaction mixture before, during or after the dehydrogenation/condensation.

**17.** Process according to any one of claims 14 to 16, characterized in that it is arranged for the hydrosilylation to be catalysed by at least a part of the dehydrogenation/condensation catalyst.

**18.** Functionalized polyorganosiloxane comprising, in the chain and/or at the chain end, on the one hand, alkoxy functional groups Y each connected to the silicone via an SiOC bond and, on the other hand, W functional groups, where W is hydrogen or a monovalent hydrocarbon radical, each connected to the silicone via an SiH or SiC bond, the said polyorganosiloxane being characterized in that it can be obtained by the process consisting:

+ in the case where W = H:

in reacting a starting polyorganosiloxane comprising units of formula (II) as defined above in claim 1, in which units W represents hydrogen, with at least one alcohol of formula YH from which the functionality Y of the unit (I) derives and which is useful as reactant and as reaction solvent, in the presence of a catalyst, at least one of the active elements of which is chosen from the transition metals, according to dehydrogenation/condensation mechanism, at a temperature of between 0 and 200°C,

+ in the case where W is a hydrocarbon radical as defined above in claim 1:

- on the one hand, in reacting a starting polyorganosiloxane comprising units of formula (II) as defined above in claim 1, in which units W represents hydrogen, with at least one alcohol of formula YH from which the functionality Y of the unit (I) derives and which is useful as reactant and as reaction solvent, in the presence of a catalyst, at least one of the active elements of which is chosen from the transition metals, according to a dehydrogenation/condensation mechanism, at a temperature of between 0 and 200°C (1st phase), and
- on the other hand, in reacting the polyorganosiloxane which has been converted by dehydrogenation/condensation in the 1st phase with at least one olefinic compound carrying at least one $\pi$ bond, from which the W functionality derives, so as to make it possible to add the first to the second, according to a hydrosilylation mechanism, in the presence of a catalyst and at a temperature of between 5 and 100°C.

**19.** Polyorganosiloxane according to claim 18, characterized in that the dehydrogenation/condensation catalyst is chosen from those containing at least one of the following elements: Pt, Rh, Ru, Pd, Ni and their combinations, this catalyst optionally being coupled to a support, which may or may not be inert.

**20.** Polyorganosiloxane according to claim 18 or 19, characterized in that the dehydrogenation/condensation is carried out at a temperature of between 20 and 80°C.

**21.** Polyorganosiloxane according to any one of claims 18 to 20, characterized in that the hydrosilylation is carried out at a temperature of between 20 and 90°C.

**22.** Polyorganosiloxane according to any one of claims 18 to 21, characterized in that it is arranged for the hydrosilylation to be catalysed by at least a part of the dehydrogenation/condensation catalyst.

**23.** Application of the polyorganosiloxanes according to any one of claims 1 to 7 and/or of the polyorganosiloxanes obtained by the process according to any one of claims 8 to 17 and/or of the polyorganosiloxanes according to any one of claims 18 to 22 as antiadhesion modulators in silicone compositions.

**24.** Application of the polyorganosiloxanes according to any one of claims 1 to 7 and/or of the polyorganosiloxanes obtained by the process according to any one of claims 8 to 17 and/or of the polyorganosiloxanes according to any one of claims 18 to 22 as additives for surface treatment compositions.

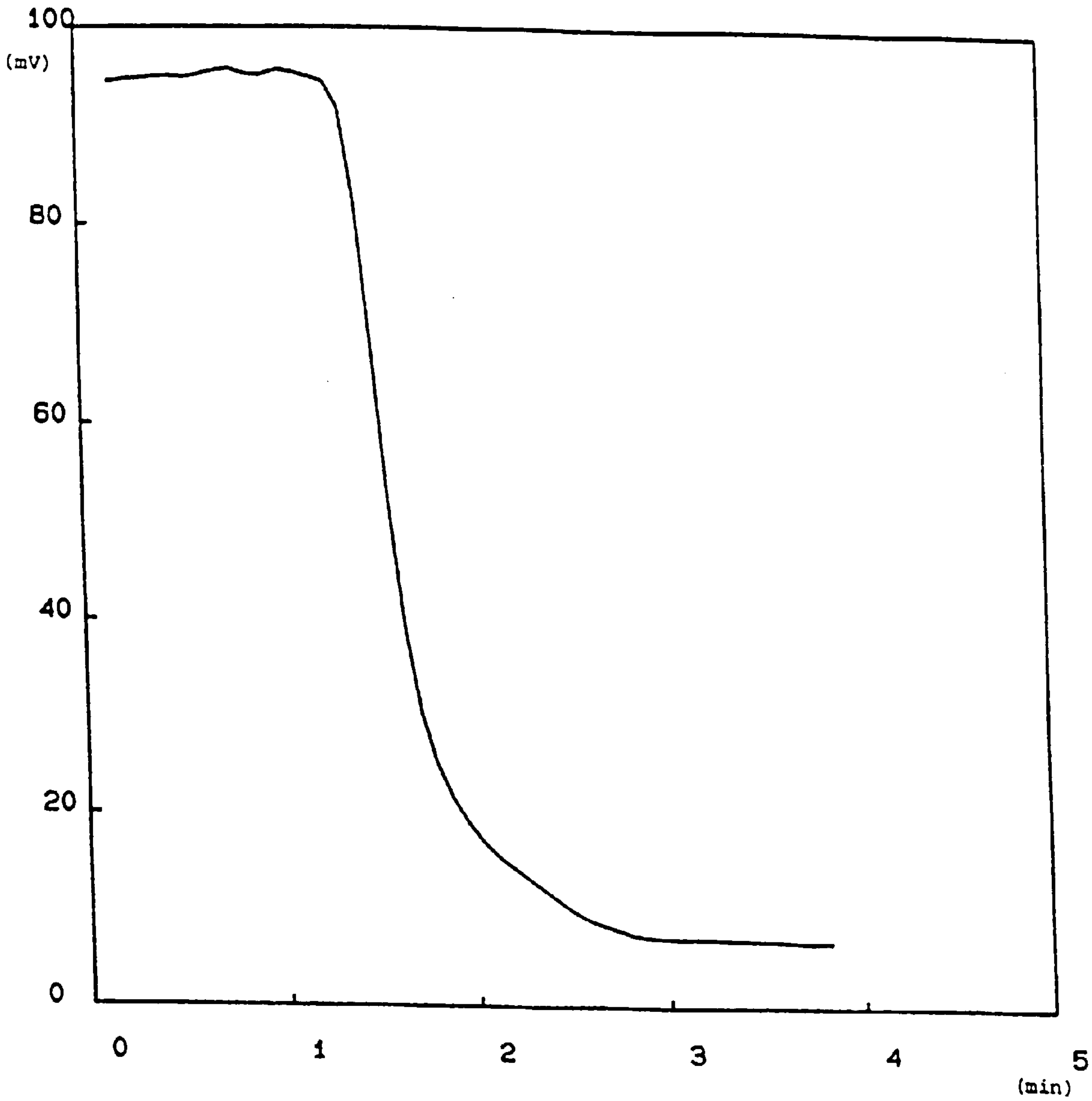


(FIG. 1)